(19) Europäisches Patentamt
European Patent Office
Office européen des brevets

(11) EP 2 257 597 B1

(12) **EUROPÄISCHE PATENTSCHRIFT**

(45) Veröffentlichungstag und Bekanntmachung des Hinweises auf die Patenterteilung:
**30.11.2011 Patentblatt 2011/48**

(21) Anmeldenummer: **09721656.8**

(22) Anmeldetag: **18.03.2009**

(51) Int Cl.:
***C08L 77/00*** *(2006.01)* ***C08L 77/02*** *(2006.01)*
***D01F 6/90*** *(2006.01)* ***C08K 3/22*** *(2006.01)*
***C08K 3/34*** *(2006.01)* ***C08L 73/02*** *(2006.01)*
***C08L 79/08*** *(2006.01)*

(86) Internationale Anmeldenummer:
**PCT/EP2009/053165**

(87) Internationale Veröffentlichungsnummer:
**WO 2009/115535 (24.09.2009 Gazette 2009/39)**

(54) **POLYAMID-NANOKOMPOSITE MIT HYPERVERZWEIGTEN POLYETHERAMINEN**

POLYAMIDE NANOCOMPOSITES WITH HYPER- BRANCHED POLYETHERAMINES

NANOCOMPOSITE DE POLYAMIDE AVEC POLYÉTHERAMINES HYPERRAMIFIÉES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **18.03.2008 EP 08152906**

(43) Veröffentlichungstag der Anmeldung:
**08.12.2010 Patentblatt 2010/49**

(73) Patentinhaber: **BASF SE**
**67056 Ludwigshafen (DE)**

(72) Erfinder:
- **JAIN, Sachin**
  **68165 Mannheim (DE)**
- **GABRIEL, Claus**
  **64347 Griesheim (DE)**
- **DESBOIS, Philippe**
  **68535 Edingen-Neckarhausen (DE)**
- **OPFERMANN, Dirk**
  **68163 Mannheim (DE)**
- **EIBECK, Peter**
  **67346 Speyer (DE)**
- **BRUCHMANN, Bernd**
  **67251 Freinsheim (DE)**
- **KLATT, Martin**
  **68165 Mannheim (DE)**

(56) Entgegenhaltungen:
**DE-A1-102004 043 825** **FR-A- 2 856 693**

- **WERNER E VAN ZYL ET AL: "Hybrid Polyamide/ Silica Nanocomposites: Synthesis and Mechanical Testing" 8. Februar 2002 (2002-02-08), MACROMOLECULAR MATERIALS AND ENGINEERING, PAGE(S) 106 - 110 , XP002525471 Band 287, Nr. 2, * Seite 108, Abbildung 1; Seite 109 ***

Bemerkungen:
Die Akte enthält technische Angaben, die nach dem Eingang der Anmeldung eingereicht wurden und die nicht in dieser Patentschrift enthalten sind.

EP 2 257 597 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Polyamid-Nanokomposite mit hyperverzweigten Polyetheraminen

Beschreibung

Die Erfindung betrifft thermoplastische Formmassen, enthaltend die Komponenten

A) mindestens ein thermoplastisches Polyamid,

B) mindestens ein hyperverzweigtes Polyetheramin,

C) mindestens ein amorphes Oxid und/oder Oxidhydrat mindestens eines Metalls oder Halbmetalls mit einem zahlengewichteten mittleren Durchmesser der Primärpartikel von 0,5 bis 20 nm.

Weiterhin betrifft die Erfindung die Verwendung der genannten Komponenten B) und C) zur Verbesserung der Fließfähigkeit und/oder Wärmestabilität von Polyamiden, die Verwendung der Formmassen zur Herstellung von Fasern, Folien und Formkörpern jeglicher Art sowie die hierbei erhältlichen Fasern, Folien und Formkörper.

Polyetheramin(-polyole) werden üblicherweise aus Trialkanolaminen, z.B. Triethanolamin, Tripropanolamin, Triisopropanolamin, gegebenenfalls in Mischung mit Mono-oder Dialkanolaminen erhalten, indem diese Monomere unter Katalyse, z.B. saurer oder basischer Katalyse, unter Wassereliminierung verethert werden. Die Herstellung dieser Polymere ist z.B. beschrieben in US 2,178,173, US 2,290,415, US 2,407,895 und DE 40 03 243. Die Polymerisation kann entweder statistisch erfolgen oder es können Blockstrukturen aus einzelnen Alkanolaminen hergestellt werden, die in einer weiteren Reaktion miteinander verknüpft werden (siehe dazu auch US 4,404,362).

Zur Fließverbesserung von thermoplastischen Polyestern und Polycarbonaten werden im allgemeinen Schmiermittel zugesetzt (siehe Gächter, Müller: Kunststoffadditive, 3. Ausgabe S. 479, 486-488, Carl Hanser Verlag 1989). Nachteile hierbei sind insbesondere das Ausblühen der Additive bei der Verarbeitung.

Die EP-A 1 424 360 beschreibt die Verwendung von terminal-polyfunktionellen polymeren Verbindungen aus der Gruppe der Polyester, Polyglycerole und Polyether zur Erniedrigung der Schmelzeviskosität in thermoplastischen Polykondensaten.

Die WO 2006/42705 beschreibt thermoplastische Formmassen auf Basis von Polyamiden und hochverzweigten Polycarbonaten. Es ist aus der genannten WO 2006/42705 darüber hinaus bekannt, dass platten- oder nadelförmige Nanofüllstoffe die Festigkeit erhöhen können. Nachteilig ist jedoch eine Verschlechterung der Fliessfähigkeit durch Zugabe derartiger Füllstoffe.

Die WO 2004/041937 offenbart thermoplastische Formmassen auf Basis von semikristallinem Polyamid, amorphem Polyamid sowie speziellen verzweigten Pfropf-Copolyamiden. Die Polyamidformmassen sollen auch bei hohen Füllgraden durch übliche Verstärkungsstoffe bzw. Füllstoffe eine niedrige Schmelzeviskosität aufweisen.

Die WO 2006/122602 beschreibt Formmassen auf Basis von thermoplastischem Polyamid, welches noch mindestens ein Polyamid-Oligomer mit linearer oder verzweigter Kettenstruktur enthält. Die Polyamidformmassen sollen eine deutlich verbesserte Fliessfähigkeit aufweisen. Die Anwendung zielt auf leitfähige Thermoplaste, die mit entsprechenden Füllstoffen wie Ruß oder auch Kohlenstoff-Nanofibrillen erhalten werden. Die WO 2006/122602 weist darauf hin, dass der Zusatz kleinskaliger, teilchenförmiger Füllstoffe genau wie der Zusatz von Glasfasern zu einer nachteiligen Reduktion der Fliessfähigkeit der Polyamidschmelze führt. Die Situation wird durch den Zusatz von Polyamid-Oligomeren verbessert.

Demzufolge sind zwar hoch- beziehungsweise hyperverzweigte organische Verbindungen zur Verbesserung der Fließfähigkeit von Polyamidschmelzen bekannt. Allerdings resultiert die Erniedrigung der Schmelzeviskosität aus einer Veränderung der molekularen Struktur, insbesondere durch Molekulargewichtsabbau. Hieraus ergibt sich eine nachteilige Verschlechterung der mechanischen Eigenschaften, insbesondere was die Schlagzähigkeit betrifft, aber auch hinsichtlich der Festigkeit, insbesondere der Bruchfestigkeit.

Aus der nicht veröffentlichten PCT/EP2008/050062 ist bekannt, dass sich durch Zugabe von geringen Mengen von bestimmten, aus einer Sol-Gel-Synthese erhältlichen Metall- oder Halbmetalloxiden bzw. -hydraten mit einer Teilchengröße bis zu 10 nm eine Verringerung der Schmelzeviskosität in Polyamiden erzielen lässt, welche die genannten Nachteile der Verschlechterung der mechanischen Eigenschaften vermeidet.

Der Grad der Reduktion der Schmelzeviskosität im Verhältnis zu den mechanischen Eigenschaften ist jedoch nicht für alle Anwendungen und für alle Polyamid-Typen und Molekulargewichte ausreichend.

Es war die Aufgabe der vorliegenden Erfindung, die genannten Nachteile des Standes der Technik zu vermeiden. Es sollten Polyamid-Formmassen, insbesondere gefüllte Polyamidformmassen, mit verringerter Schmelzeviskosität bei gleichzeitig günstigen mechanischen Eigenschaften zur Verfügung gestellt werden. Insbesondere sollte die Schlagzähigkeit und die Bruchfestigkeit bei verbesserter Fliessfähigkeit mindestens das Niveau der Formmasse ohne Hilfsstoffe zur Fliessverbesserung erzielen. Eine weitere Aufgabe der vorliegenden Erfindung war es, Polyamidformmassen mit verbesserter Wärmestabilität bereitzustellen. Ferner sollte das Additiv bzw. die Additive in möglichst geringen Mengen in den Formmassen vorliegen. Die Additive sollten bei der Verarbeitung nicht ausblühen.

Dementsprechend wurden die eingangs genannten thermoplastischen Formmassen, deren Verwendung, und die aus ihnen erhältlichen Formkörper, Folien und Fasern gefunden. Bevorzugte Ausführungsformen der Erfindung sind der Beschreibung und den Unteransprüchen zu entnehmen. Kombinationen bevorzugter Ausführungsformen verlassen nicht den Rahmen der vorliegenden Erfindung.

Erfindungsgemäß enthalten die thermoplastische Formmassen folgende Komponenten:

A) mindestens ein thermoplastisches Polyamid,

B) mindestens ein hyperverzweigtes Polyetheramin,

C) mindestens ein amorphes Oxid und/oder Oxidhydrat mindestens eines Metalls oder Halbmetalls mit einem zahlengewichteten mittleren Durchmesser der Primärpartikel von 0,5 bis 20 nm.

Vorzugsweise enthalten die thermoplastischen Formmassen von 50 bis 99,9 Gew.-% der Komponente A), von 0,05 bis 30 Gew.-% der Komponente B) und von 0,05 bis 20 Gew.-% der Komponente C), wobei die Summe der Gewichtsprozente der Komponenten A) bis C) 100 Gew.-% ergibt.

Der vorgenannte bevorzugte Bereich der Gewichtsprozente umfasst dabei die erfindungsgemäßen thermoplastischen Formmassen im engeren Sinne als auch sogenannte Masterbatche als Zwischenprodukte, in denen die Komponenten B) und C) in stark angereicherter Form in A) bereitgestellt werden.

Vorzugsweise enthalten die thermoplastischen Formmassen die Komponenten B) und C) in einem Gewichtsverhältnis B/C von 0,5 bis 8, vorzugsweise von 1 bis 4, insbesondere von 1 bis 2.

Die efindungsgemäßen Formmassen enthalten in einer besonders bevorzugten Ausführungsform von 85 bis 99,9 Gew.-% der Komponente A), von 0,05 bis 10 Gew.-% der Komponente B) und von 0,05 bis 5 Gew.-% der Komponente C), wobei die Summe der Gewichtsprozente der Komponenten A) bis C) 100 Gew.-% ergibt. Die erfindungsgemäßen Formmassen enthalten hierbei besonders bevorzugt von 93 bis 99,9 Gew.-% der Komponente A), von 0,05 bis 5 Gew.-% der Komponente B) und von 0,05 bis 2 Gew.-% der Komponente C), wobei die Summe der Gewichtsprozente der Komponenten A) bis C) 100 Gew.-% ergibt.

Komponente A

Erfindungsgemäß enthalten die thermoplastischen Formmassen als Komponente A) mindestens ein thermoplastisches Polyamid.

Die Polyamide der erfindungsgemäßen Formmassen weisen im allgemeinen eine Viskositätszahl von 70 bis 350, vorzugsweise 70 bis 200 ml/g auf, bestimmt in einer 0,5 gew.-%igen Lösung in 96 gew.-%iger Schwefelsäure bei 25°C gemäß ISO 307.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Vorzugsweise werden Polyamide eingesetzt, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar, insbesondere Adipinsäure, Azelainsäure, Sebacinsäure, Dodecandisäure und Terephthal- und/oder Isophthalsäure.

Als Diamine eignen sich besonders Alkandiamine mit 6 bis 12, insbesondere 6 bis 8 Kohlenstoffatomen sowie m-Xylylendiamin, Di-(4-aminophenyl)methan, Di-(4-aminocyclohexyl)-methan, 2,2-Di- (4-aminophenyl)-propan, 2,2-Di-(4-aminocyclohexyl)-propan oder 1,5-Diamino-2-methyl-pentan.

Bevorzugte Polyamide sind Polyhexamethylenadipinsäureamid, Polyhexamethylensebacinsäureamid und Polycaprolactam sowie Copolyamide 6/66, insbesondere mit einem Anteil von 5 bis 95 Gew.-% an Caprolactam-Einheiten.

Weiterhin geeignete Polyamide sind erhältlich aus ω-Aminoalkylnitrilen wie insbesondere Aminocapronitril (PA 6) und Adipodinitril mit Hexamethylendiamin (PA 66) durch sog. Direktpolymerisation in Anwesenheit von Wasser, wie beispielsweise in der DE-A 10313681, EP-A 1198491 und EP 922065 beschrieben.

Außerdem seien auch noch Polyamide erwähnt, die z.B. durch Kondensation von 1,4-Diaminobutan mit Adipinsäure unter erhöhter Temperatur erhältlich sind (Polyamid 4,6). Herstellungsverfahren für Polyamide dieser Struktur

sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist.

Weiterhin haben sich solche teilaromatischen Copolyamide wie PA 6/6T und PA 66/6T als besonders vorteilhaft erwiesen, insbesondere solche, deren Triamingehalt weniger als 0,5, vorzugsweise weniger als 0,3 Gew.-% beträgt (siehe EP-A 299 444).

Die Herstellung der bevorzugten teilaromatischen Copolyamide mit niedrigem Triamingehalt kann nach den in den EP-A 129 195 und 129 196 beschriebenen Verfahren erfolgen.

Die bevorzugten teilaromatischen Copolyamide A) enthalten als Komponente $a_1$) von 40 bis 90 Gew.-% Einheiten, die sich von Terephthalsäure und Hexamethylendiamin ableiten, bezogen auf Komponente A). Ein geringer Anteil der Terephthalsäure, vorzugsweise nicht mehr als 10 Gew.-% der gesamten eingesetzten aromatischen Dicarbonsäuren, können durch Isophthalsäure oder andere aromatische Dicarbonsäuren, vorzugsweise solche, in denen die Carboxylgruppen in para-Stellung stehen, ersetzt werden.

Neben den Einheiten, die sich von Terephthalsäure und Hexamethylendiamin ableiten, enthalten die teilaromatischen Copolyamide Einheiten, die sich von ε-Caprolactam ableiten ($a_2$) und/oder Einheiten, die sich von Adipinsäure und Hexamethylendiamin ($a_3$) ableiten.

Der Anteil an Einheiten, die sich von ε-Caprolactam ableiten, beträgt maximal 50 Gew.-%, vorzugsweise von 20 bis 50 Gew.-%, insbesondere von 25 bis 40 Gew.-%, während der Anteil an Einheiten, die sich von Adipinsäure und Hexamethylendiamin ableiten, bis zu 60 Gew.-%, vorzugsweise von 30 bis 60 Gew.-% und insbesondere von 35 bis 55 Gew.-% beträgt, jeweils bezogen auf Komponente A).

Die Copolyamide können auch sowohl Einheiten von ε-Caprolactam als auch Einheiten von Adipinsäure und Hexamethylendiamin enthalten; in diesem Fall ist darauf zu achten, dass der Anteil an Einheiten, die frei von aromatischen Gruppen sind, mindestens 10 Gew.-% beträgt, vorzugsweise mindestens 20 Gew.-%, bezogen auf Komponente A). Das Verhältnis der Einheiten, die sich von ε-Caprolactam und von Adipinsäure und Hexamethylendiamin ableiten, unterliegt dabei keiner besonderen Beschränkung.

Als besonders vorteilhaft für viele Anwendungszwecke haben sich Polyamide mit von 50 bis 80, insbesondere von 60 bis 75 Gew.-% Einheiten, die sich von Terephthalsäure und Hexamethylendiamin ableiten (Einheiten $a_1$)) und von 20 bis 50, vorzugsweise von 25 bis 40 Gew.-% Einheiten, die sich von ε-Caprolactam ableiten (Einheiten $a_2$)), erwiesen, jeweils bezogen auf Komponente A).

Neben den vorstehend beschriebenen Einheiten $a_1$) bis $a_3$) können die erfindungsgemäßen teilaromatischen Copolyamide A) noch untergeordnete Mengen, vorzugsweise nicht mehr als 15 Gew.-%, insbesondere nicht mehr als 10 Gew.-% an weiteren Polyamidbausteinen ($a_4$) enthalten, wie sie von anderen Polyamiden bekannt sind. Diese Bausteine können sich von Dicarbonsäuren mit 4 bis 16 Kohlenstoffatomen und aliphatischen oder cycloaliphatischen Diaminen mit 4 bis 16 Kohlenstoffatomen sowie von Aminocarbonsäuren bzw. entsprechenden Lactamen mit 7 bis 12 Kohlenstoffatomen ableiten. Als geeignete Monomere dieser Typen seien hier nur Suberinsäure, Azelainsäure, Sebacinsäure oder Isophthalsäure als Vertreter der Dicarbonsäuren, 1,4-Butandiamin, 1,5-Pentandiamin, Piperazin, 4,4'-Diaminodicyclohexylmethan, 2,2-(4,4'-Diaminodicyclohexyl)propan oder 3,3'-Dimethyl-4,4'-Diaminodicyclohexylmethan als Vertreter der Diamine und Capryllactam, Önanthlactam, Omega-Aminoundecansäure und Laurinlactam als Vertreter von Lactamen bzw. Aminocarbonsäuren genannt.

Die Schmelzpunkte der teilaromatischen Copolyamide A) liegen im Bereich von 260 bis über 300°C, wobei dieser hohe Schmelzpunkt auch mit einer hohen Glasübergangstemperatur von in der Regel mehr als 75, insbesondere mehr als 85°C verbunden ist.

Binäre Copolyamide auf der Basis von Terephthalsäure, Hexamethylendiamin und ε-Caprolactam weisen bei Gehalten von etwa 70 Gew.-% an Einheiten, die sich von Terephthalsäure und Hexamethylendiamin ableiten, Schmelzpunkte im Bereich von 300°C und eine Glasübergangstemperatur von mehr als 110°C auf.

Binäre Copolyamide auf der Basis von Terephthalsäure, Adipinsäure und Hexamethylendiamin (HMD) erreichen bereits bei niedrigeren Gehalten von etwa 55 Gew.-% Einheiten aus Terephthalsäure und Hexamethylendiamin Schmelzpunkte von 300°C und mehr, wobei die Glasübergangstemperatur nicht ganz so hoch liegt wie bei binären Copolyamiden, die anstelle von Adipinsäure bzw. Adipinsäure/HMD ε-Caprolactam enthalten.

Die nachfolgende nicht abschließende Aufstellung enthält die genannten, sowie weitere Polyamide A) im Sinne der Erfindung und die enthaltenen Monomere.

| AB-Polymere: | |
|---|---|
| PA 4 | Pyrrolidon |
| PA 6 | ε-Caprolactam |
| PA 7 | Ethanolactam |
| PA 8 | Capryllactam |

(fortgesetzt)

| | |
|---|---|
| PA 9 | 9-Aminopelargonsäure |
| PA 11 | 11-Aminoundecansäure |
| PA 12 | Laurinlactam |
| AA/BB-Polymere | |
| PA 46 | Tetramethylendiamin, Adipinsäure |
| PA 66 | Hexamethylendiamin, Adipinsäure |
| PA 69 | Hexamethylendiamin, Azelainsäure |
| PA 610 | Hexamethylendiamin, Sebacinsäure |
| PA 612 | Hexamethylendiamin, Decandicarbonsäure |
| PA 613 | Hexamethylendiamin, Undecandicarbonsäure |
| PA 1212 | 1,12-Dodecandiamin, Decandicarbonsäure |
| PA 1313 | 1,13-Diaminotridecan, Undecandicarbonsäure |
| PA 6T | Hexamethylendiamin, Terephthalsäure |
| PA 9T | Nonyldiamin/Terephthalsäure |
| PA MXD6 | m-Xylylendiamin, Adipinsäure |
| PA 6I | Hexamethylendiamin, Isophthalsäure |
| PA 6-3-T | Trimethylhexamethylendiamin, Terephthalsäure |
| PA 6/6T | (siehe PA 6 und PA 6T) |
| PA 6/66 | (siehe PA 6 und PA 66) |
| PA 6/12 | (siehe PA 6 und PA 12) |
| PA 66/6/610 | (siehe PA 66, PA 6 und PA 610) |
| PA 6I/6T | (siehe PA 6I und PA 6T) |
| PA PACM 12 | Diaminodicyclohexylmethan, Laurinlactam |
| PA 6I/6T/PACM | wie PA 6I/6T + Diaminodicyclohexylmethan |
| PA 12/MACMI | Laurinlactam, Dimethyl-diaminodicyclohexylmethan, Isophthalsäure |
| PA 12/MACMT | Laurinlactam, Dimethyl-diaminodicyclohexylmethan, Terephthalsäure |
| PA PDA-T | Phenylendiamin, Terephthalsäure |

Es können aber auch Mischungen obiger Polyamide eingesetzt werden.

Komponente B

Erfindungsgemäß enthalten die thermoplastischen Formmassen als Komponente B) mindestens ein hyperverzweigtes Polyetheramin. Die erfindungsgemäßen Formmassen enthalten vorzugsweise von 0,05 bis 30, insbesondere von 0,05 bis 10 und besonders bevorzugt von 0,1 bis 4 Gew.-% mindestens eines hyperverzweigten Polyetheramins.

Das Merkmal "hyperverzweigt" bedeutet im Rahmen der vorliegenden Erfindung, dass der Verzweigungsgrad DB (degree of branching) der betreffenden Polymere, der definiert ist als DB (%) = 100 x (T + Z) / (T + Z + L), wobei T die mittlere Anzahl der terminal gebundenen Monomereinheiten, Z die mittlere Anzahl der Verzweigungen bildenden Monomereinheiten und L die mittlere Anzahl der linear gebundenen Monomereinheiten in den Makromolekülen der jeweiligen Stoffe bedeuten, von 10 bis 98 %, bevorzugt von 25 - 90 % und besonders bevorzugt von 30 bis 80 % beträgt.

Hyperverzweigte Polymere, auch hochverzweigte Polymere genannt, sind von den Dendrimeren zu unterscheiden. Dendrimere sind Polymere mit perfekt symmetrischer Struktur und lassen sich ausgehend von einem zentralen Molekül durch kontrollierte schrittweise Verknüpfung von jeweils zwei oder mehr di- oder mehrfunktionellen Monomeren mit jedem bereits gebundenen Monomer herstellen. Dabei vervielfältigt sich mit jedem Verknüpfungsschritt die Zahl der Monomerendgruppen (und damit der Verknüpfungen), und man erhält Polymere mit baumartigen Strukturen, im Idealfall kugelförmig, deren Äste jeweils exakt dieselbe Anzahl von Monomereinheiten enthalten. Aufgrund dieser perfekten Struktur sind die Polymereigenschaften in vielen Fällen vorteilhaft, beispielsweise beobachtet man eine geringe Viskosität und eine hohe Reaktivität aufgrund der hohen Anzahl funktioneller Gruppen an der Kugeloberfläche. Allerdings wird die Herstellung dadurch verkompliziert, dass bei jedem Verknüpfungsschritt Schutzgruppen eingeführt und wieder entfernt

werden müssen und Reinigungsoperationen erforderlich sind, weshalb man Dendrimere üblicherweise nur im Labormaßstab herstellt.

Jedoch kann man mit großtechnischen Verfahren hochverzweigte bzw. hyperverzweigte Polymere herstellen. Der Begriff hyperverzweigt umfasst im Rahmen der vorliegenden Erfindung den Begriff hochverzweigt und wird im Folgenden als beide Begriffe repräsentierend weiterverwendet. Die hyperverzweigten Polymere weisen neben perfekten dendritischen Strukturen auch lineare Polymerketten und ungleiche Polymeräste auf, was jedoch die Polymereigenschaften verglichen zu denen der perfekten Dendrimere nicht wesentlich verschlechtert. Hyperverzweigte Polymere lassen sich insbesondere über zwei Synthesewege herstellen, die als $AB_2$ und $A_x$+$B_y$ bekannt sind. Darin stehen $A_x$ und $B_y$ für verschiedene Monomere und die Indices x und y für die Anzahl der funktionellen Gruppen, die in A bzw. B enthalten sind, also für die Funktionalität von A bzw. B. Beim $AB_2$-Weg wird ein trifunktionelles Monomer mit einer reaktiven Gruppe A und zwei reaktiven Gruppen B zu einem hoch- oder hyperverzweigten Polymer umgesetzt. Bei der $A_x$ und $B_y$-Synthese, dargestellt am Beispiel der $A_2$+$B_3$-Synthese, setzt man ein difunktionelles Monomer $A_2$ mit einem trifunktionellen Monomer $B_3$ um. Dabei entsteht zunächst ein 1:1-Addukt aus A und B mit im Mittel einer funktionellen Gruppe A und zwei funktionellen Gruppen B, das dann ebenfalls zu einem hyperverzweigten Polymer reagieren kann.

Durch den oben definierten Verzweigungsgrad unterscheiden sich die erfindungsgemäß verwendeten (nicht-dendrimeren) hyperverzweigten Polymere von den Dendrimeren. "Dendrimer" sind im Zusammenhang mit der vorliegenden Erfindung die Polymere dann, wenn ihr Verzweigungsgrad DB = 99,9 - 100 % beträgt. Damit weist ein Dendrimer die maximal mögliche Anzahl an Verzweigungsstellen auf, welche nur durch einen hochsymmetrischen Aufbau erreicht werden kann. Zur Definition des "Degree of Branching" siehe auch H. Frey et al., Acta Polym. 1997, 48, 30.

Unter hyperverzweigten Polymeren sind somit im Rahmen dieser Erfindung im Wesentlichen unvernetzte Makromoleküle zu verstehen, die sowohl strukturell als auch molekular uneinheitlich sind.

Im Rahmen der vorliegenden Erfindung kommen vorzugsweise hochfunktionelle hyperverzweigte Polyetheramine B) zum Einsatz. Unter einem hochfunktionellen hyperverzweigten Polyetheramin ist im Rahmen dieser Erfindung ein Produkt zu verstehen, das neben den Ethergruppen und den Aminogruppen, die das Polymergerüst bilden, end- oder seitenständig weiterhin im Mittel mindestens drei, bevorzugt mindestens sechs, insbesondere bevorzugt mindestens zehn funktionelle Gruppen aufweist. Bei den funktionellen Gruppen handelt es sich vorzugsweise um OH-Gruppen. Die Anzahl der end- oder seitenständigen funktionellen Gruppen ist prinzipiell nach oben nicht beschränkt, jedoch können Produkte mit sehr hoher Anzahl funktioneller Gruppen unerwünschte Eigenschaften, wie beispielsweise hohe Viskosität oder schlechte Löslichkeit, aufweisen. Die hochfunktionellen hyperverzweigte Polyetheraminpolyole der vorliegenden Erfindung weisen vorzugsweise nicht mehr als 500 end- oder seitenständige funktionelle Gruppen, insbesondere nicht mehr als 100 end- oder seitenständige Gruppen auf.

Die Komponente B) ist vorzugsweise erhältlich durch Umsetzung von

- mindestens einem tertiären Amin mit funktionellen Hydroxygruppen, insbesondere mindestens einem Di-, Tri- oder Tetraalkanolamin, optional in Gegenwart von
- sekundären Aminen, welche Hydroxylgruppen als Substituent tragen, insbesondere Dialkanolaminen und/oder optional in Gegenwart von
- di- oder höherfunktionellen Polyetherpolyolen,

wobei die Umsetzung vorzugsweise in Gegenwart eines Umetherungs- und Veretherungskatalysators durchgeführt wird.

Darüber hinaus ist eine weiter bevorzugte Ausgestaltung der Komponente B) erhältlich durch weitere Umsetzung der wie vorgenannt erhältlichen Polyetheramine durch Umsetzung mit Ethylenoxid und/oder Propylenoxid und/oder Butylenoxid, insbesondere Polyethylenimine mit einem inneren Polyethylenoxidblock und mit einem äußeren Polypropylenoxidblock wie in der Europäischen Patentanmeldung mit den Aktenzeichen 07120395.4 beschrieben sowie alkoxylierte Polyethylenimine wie in der Europäischen Patentanmeldung mit den Aktenzeichen 07120393.9 beschrieben.

Bevorzugte tertiäre Dialkanolamine mit funktionellen Hydroxygruppen sind:

Diethanolalkylamine mit C1 bis C30, insbesondere C1 bis C18-Alkylresten, Diethanolamin, Dipropanolamin, Diisopropanolamin, Dibutanolamin, Dipentanolamin, Dihexanolamin, N-Methyl-Diethanolamin, N-Methyl-Dipropanolamin, N-Methyl-Diisopropanolamin, N-Methyl-Dibutanolamin, N-Methyl-Dipentanolamin, N-Methyl-Dihexanolamin, N-Ethyl-Diethanolamin, N-Ethyl-Dipropanolamin, N-Ethyl-Diisopropanolamin, N-Ethyl-Dibutanolamin, N-Ethyl-Dipentanolamin, N-Ethyl-Dihexanolamin, N-Propyl-Diethanolamin, N-Propyl-Dipropanolamin, N-Propyl-Diisopropanolamin, N-Propyl-Dibutanolamin, N-Propyl-Dipentanolamin, N-Propyl-Dihexanolamin, Diethanolethylamin, Diethanolpropylamin, Diethanolmethylamin, Dipropanolmethylamin, Cyclohexanoldiethanolamin, Dicyclohexanolethanolamin, Cyclohexyldiethanolamin, Dicyclohexyldiethanolamin, Dicyclohexanolethylamin, Benzyldiethanolamin, Dibenzylethanolamin, Benzyldipropanolamin, Tripentanolamin, Trihexanolamin, Ethylhexylethanolamin, Octadecyldiethanolamin, und Polyethanolamine.

Bevorzugte Trialkanolamine sind Trimethanolamin, Triethanolamin, Tripropanolamin, Triisopropanolamin, Tributanolamin, Tripentanolamin, und die daraus abgeleiteten Derivate.

Außerdem sind als Trialkanolamine bevorzugt:

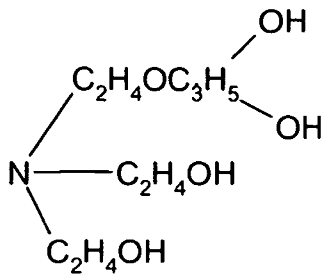

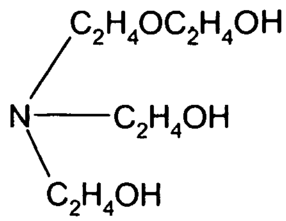

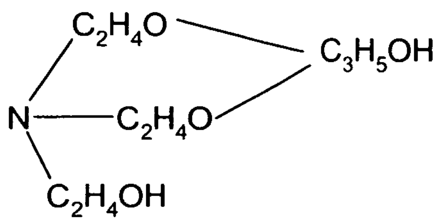

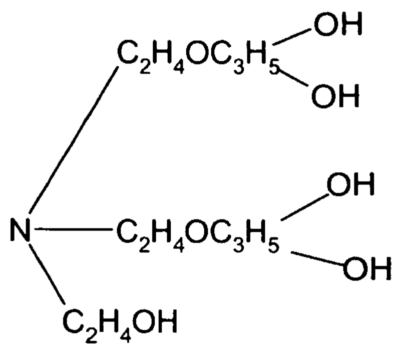

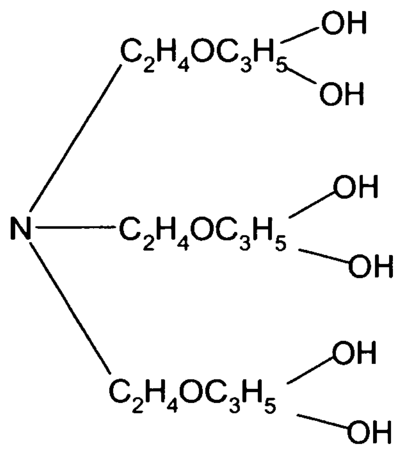

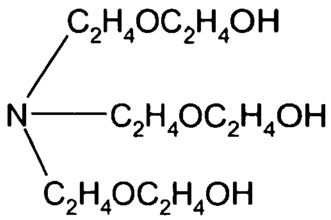

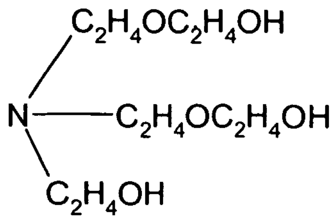

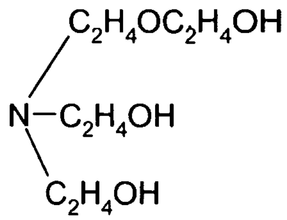

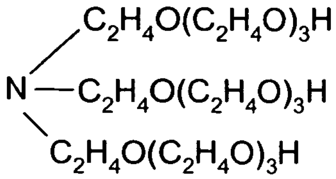

Bevorzugte Tetraalkanolamine sind:

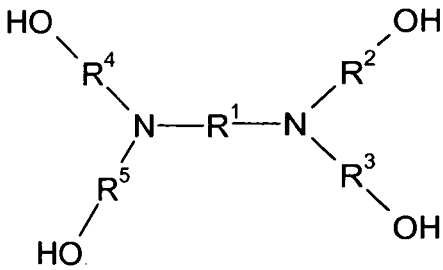

,

wobei vorzugsweise $R^1 = CH_2\text{-}CH_2$ bis $(CH_2)_8$ bedeutet, insbesondere $(CH_2)_2\text{-}(CH_2)_4$; und wobei $R^2\text{-}R^5$ vorzugsweise $C_2$ bis $C_6$ bedeutet, insbesondere $C_2$ und $C_3$, wobei N,N,N',N'-Tetrahydroxyethylethylendiamin, N,N,N',N'-Tetrahydroxyethylbutylendiamin, N,N,N',N'-Tetrahydroxypropylethylendiamin, N,N,N',N'-Tetrahydroxyisopropylethylendiamin, N, N,N',N'-Tetrahydroxypropylbutylendiamin, N,N,N',N'- Tetrahydroxyisopropylbutylendiamin besonders bevorzugt sind.

Vorzugsweise weist die Komponente B) im Mittel mindestens 3 funktionelle OH-Gruppen pro Molekül auf, d.h. die mittlere OH-Funktionalität beträgt mindestens 3. Besonders bevorzugt ist die Komponente B) erhältlich durch Umsetzung von mindestens einem Trialkanolamin optional mit Dialkanolaminen und/oder optional mit di- oder höherfunktionellen Polyetherolen.

In einer besonders bevorzugten Ausführungsform ist Komponente B) erhältlich durch Umsetzung von mindestens einem Trialkanolamin der allgemeinen Formel

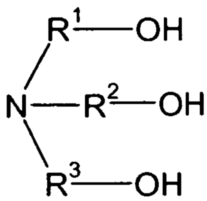

,

in der die Reste $R^1$ bis $R^3$ unabhängig voneinander gleiche oder unterschiedliche, lineare oder verzweigte Alkylengruppen, vorzugsweise mit 2 bis 10 C-Atomen, insbesondere von 2 bis 6 C-Atomen, bedeuten.

Als Ausgangsmaterial wird dabei bevorzugt Triethanolamin, Tripropanolamin, Triisopropanol-amin oder Tributanolamin oder deren Mischungen eingesetzt; gegebenenfalls in Kombination mit Dialkanolaminen, wie Diethanolamin, Dipropanolamin, Diisopropanolamin, Dibutanolamin, N,N'-Dihydroxyalkyl-piperidin (alkyl = C1-C8), Dicyclohexanolamin, Dipentanolamin, Dihexanolamin, wobei Dialkanolamine bevorzugt sind.

Weiterhin können die o.g. Trialkanolamine gegebenenfalls in Kombination mit di- oder höherfunktionellen Polyetherolen, insbesondere auf der Basis von Ethylenoxid und/oder Propylenoxid eingesetzt werden.

Ganz besonders bevorzugt wird jedoch Triethanolamin und Triisopropanolamin oder deren Gemisch als Ausgangsprodukt verwendet.

Die hyperverzweigten Polyetheramine B) sind nach der Reaktion, also ohne weitere Modifikation, mit Hydroxylgruppen terminiert. Sie lösen sich gut in verschiedenen Lösemitteln.

Beispiele für derartige Lösungsmittel sind aromatische und/oder (cyclo)aliphatische Kohlenwasserstoffe und deren Gemische, halogenierte Kohlenwasserstoffe, Ketone, Ester und Ether.

Bevorzugt sind aromatische Kohlenwasserstoffe, (cyclo)aliphatische Kohlenwasserstoffe, Alkansäurealkylester, Ketone, alkoxylierte Alkansäurealkylester und deren Gemische.

Besonders bevorzugt sind ein- oder mehrfach alkylierte Benzole und Naphthaline, Ketone, Alkansäurealkylester und alkoxylierte Alkansäurealkylester sowie deren Gemische.

Als aromatische Kohlenwasserstoffgemische sind solche bevorzugt, die überwiegend aromatische $C_7$- bis $C_{14}$-Kohlenwasserstoffe umfassen und einen Siedebereich von 110 bis 300°C umfassen können, besonders bevorzugt sind Toluol, o-, m- oder p-Xylol, Trimethylbenzolisomere, Tetramethylbenzolisomere, Ethylbenzol, Cumol, Tetrahydronaphthalin und solche enthaltende Gemische.

Beispiele dafür sind die Solvesso®-Marken der Firma ExxonMobil Chemical, besonders Solvesso® 100 (CAS-Nr. 64742-95-6, überwiegend $C_9$- und $C_{10}$-Aromaten, Siedebereich etwa 154-178°C), 150 (Siedebereich etwa 182-207°C) und 200 (CAS-Nr. 64742-94-5), sowie die Shellsol®-Marken der Firma Shell. Kohlenwasserstoffgemische auf Paraffinen, Cycloparaffinen und Aromaten sind auch unter den Bezeichnungen Kristallöl (beispielsweise Kristallöl 30, Siedebereich etwa 158-198°C oder Kristallöl 60: CAS-Nr. 64742-82-1), Testbenzin (beispielsweise ebenfalls CAS-Nr. 64747-82-1) oder Solventnaphtha (leicht: Siedebereich etwa 155-180°C, schwer: Siedebereich etwa 225-300°), im Handel erhältlich. Der Aromatengehalt derartiger Kohlenwasserstoffgemische beträgt in der Regel mehr als 90 Gew.-%, bevorzugt mehr als 95, besonders bevorzugt mehr als 98 und ganz besonders bevorzugt mehr als 99 Gew.-%. Es kann sinnvoll sein, Kohlenwasserstoffgemische mit einem besonders verringerten Gehalt an Naphthalin einzusetzen.

Der Gehalt an aliphatischen Kohlenwasserstoffen beträgt in der Regel weniger als 5, bevorzugt weniger als 2,5 und besonders bevorzugt weniger als 1 Gew.-%.

Halogenierte Kohlenwasserstoffe sind beispielsweise Chlorbenzol und Dichlorbenzol oder dessen Isomerengemische.

Ester sind beispielsweise n-Butylacetat, Ethylacetat, 1-Methoxypropylacetat-2 und 2-Methoxyethylacetat.

Ether sind beispielsweise THF, Dioxan sowie die Dimethyl-, ethyl- oder n-butylether von Ethylenglykol, Diethylenglykol, Triethylenglykol, Propylenglykol, Dipropylenglykol oder Tripropylenglykol.

Ketone sind beispielsweise Aceton, 2-Butanon, 2-Pentanon, 3-Pentanon, Hexanon, iso-Butyl-methylketon, Heptanon, Cyclopentanon, Cyclohexanon oder Cycloheptanon.

(Cyclo)aliphatische Kohlenwasserstoffe sind beispielsweise Dekalin, alkyliertes Dekalin und Isomerengemische von geradlinigen oder verzweigten Alkanen und/oder Cycloalkynen.

Weiterhin bevorzugt sind n-Butylacetat, Ethylacetat, 1-Methoxy-2-propylacetat, 2-Methoxyethylacetat, 2-Butanon, iso-Butyl-methylketon sowie deren Gemische, insbesondere mit den oben aufgeführten aromatischen Kohlenwasserstoffgemischen. Derartige Gemische können im Volumenverhältnis 5:1 bis 1:5 erstellt werden, bevorzugt im Volumenverhältnis 4:1 bis 1:4, besonders bevorzugt im Volumenverhältnis 3:1 bis 1:3 und ganz besonders bevorzugt im Volumenverhältnis 2:1 bis 1:2.

Bevorzugte Lösungsmittel sind Butylacetat, Methoxypropylacetat, isoButylmethylketon, 2-Butanon, Solvesso®-Marken und Xylol.

Weiterhin als Lösungsmittel geeignet können für die Polyetheramine zum Beispiel Wasser, Alkohole, wie Methanol, Ethanol, Butanol, Alkohol/Wasser-Mischungen, Aceton, 2-Butanon, Dimethylformamid, Dimethylacetamid, N-Methylpyrrolidon, N-Ethylpyrrolidon, Ethylencarbonat oder Propylencarbonat sein.

Die Herstellung der Polyetheramine erfolgt entweder in Substanz oder in Lösung. Als Lösungsmittel kommen die bereits oben angeführten Lösungsmittel in Frage. Es stellt eine bevorzugte Ausführungsform dar, die Reaktion ohne Lösungsmittel durchzuführen.

Die Temperatur bei der Herstellung sollte ausreichend für die Umsetzung des Aminoalkohols sein. In der Regel wird für die Umsetzung eine Temperatur von 100°C bis 350°C, bevorzugt von 150 bis 300, besonders bevorzugt von 180 bis 280°C und speziell von 200 bis 250°C benötigt.

In einer bevorzugten Ausführungsform wird die Kondensationsreaktion in Substanz durchgeführt. Das bei der Reaktion freiwerdende Wasser oder niedermolekulare Reaktionsprodukte können zur Beschleunigung der Reaktion aus dem Reaktionsgleichgewicht entfernt werden, z.B. destillativ, gegebenenfalls bei vermindertem Druck.

Die Abtrennung des Wassers oder der niedermolekularen Reaktionsprodukte kann auch durch Durchleiten eines unter den Reaktionsbedingungen im wesentlichen inerten Gasstromes (Strippen), wie z.B. Stickstoff oder Edelgas, zum Beispiel Helium, Neon oder Argon, unterstützt werden.

Zur Beschleunigung der Reaktion werden vorzugsweise Katalysatoren oder Katalysatorgemische zugegeben. Geeignete Katalysatoren sind Verbindungen, die Veretherungs- oder Umetherungsreaktionen katalysieren, z.B. Alkalihydroxide, Alkalicarbonate, Alkalihydrogencarbonate, vorzugsweise des Natriums, Kaliums oder Cäsiums, saure Verbindungen wie Eisenschlorid oder Zinkchlorid, Ameisensäure, Oxalsäure oder Phosphorhaltige saure Verbindungen, wie Phosphorsäure, Polyphosphorsäure, Phosphorige Säure oder Unterphosphorige Säure.

Vorzugsweise werden Phosphorsäure, Phosphorige Säure oder Unterphosphorige Säure, gegebenenfalls in mit Wasser verdünnter Form, eingesetzt.

Die Zugabe des Katalysators erfolgt im allgemeinen in einer Menge von 0,001 bis 10 mol-%, bevorzugt von 0,005 bis 7 mol-%, besonders bevorzugt von 0,01 bis 5 mol-%, bezogen auf die Menge des eingesetzten Alkanolamins oder Alkanolamingemisches.

Ferner ist es auch möglich, sowohl durch Zugabe des geeigneten Katalysators, als auch durch Wahl einer geeigneten Temperatur die intermolekulare Polykondensationsreaktion zu steuern. Weiterhin lässt sich über die Zusammensetzung der Ausgangskomponenten und über die Verweilzeit das mittlere Molekulargewicht des Polymeren einstellen.

Die Polymere, die bei erhöhter Temperatur hergestellt wurden, sind bei Raumtemperatur üblicherweise über einen längeren Zeitraum, beispielsweise über mindestens 6 Wochen stabil, ohne Trübungen, Ausfällungen und/oder einen Viskositätsanstieg zu zeigen.

Zum Abbruch der intermolekularen Polykondensationsreaktion gibt es verschiedene Möglichkeiten. Beispielsweise kann die Temperatur auf einen Bereich abgesenkt werden, in dem die Reaktion zum Stillstand kommt und das Polykondensationsprodukt lagerstabil ist. Dies ist in der Regel unterhalb von 60°C, bevorzugt unter 50°C, besonders bevorzugt unterhalb von 40°C und ganz besonders bevorzugt bei Raumtemperatur der Fall.

Weiterhin kann man den Katalysator desaktivieren, bei basischen Katalysatoren z.B. durch Zugabe einer sauren Komponente, z.B. einer Lewis-Säure oder einer organischen oder anorganischen Protonensäure, bei sauren Katalysatoren durch Zugabe einer basischen Komponente, z.B. einer Lewis-Base oder einer organischen oder anorganischen Base.

Ferner ist es möglich, die Reaktion durch Verdünnen mit einem vorgekühlten Lösungsmittel zu stoppen. Dies ist insbesondere dann bevorzugt, wenn man die Viskosität des Reaktionsgemischs durch Zugabe von Lösungsmittel anpassen muss.

Die Komponente B) weist im Rahmen der vorliegenden Erfindung vorzugsweise eine Glasübergangstemperatur von weniger als 50°C, besonders bevorzugt weniger als 30°C und insbesondere weniger als 10°C auf.

Eine nach DIN 53240 bestimmte OH-Zahl der Komponente B) im Bereich von 50 bis 1000 mg KOH/g ist günstig. Vorzugsweise weist die Komponente B) eine OH-Zahl von 100 bis 900 mg KOH/g nach DIN 53240 auf, ganz bevorzugt von150 bis 800 mg KOH/g.

Das gewichtsmittlere Molgewicht $M_w$ liegt zumeist zwischen 1.000 und 500.000, bevorzugt von 2.000 bis 300.000 g/mol, das zahlenmittlere Molgewicht $M_n$ von 500 bis 50.000, bevorzugt zwischen 1.000 und 40.000 g/mol, gemessen mittels Gelpermeationschromatographie (GPC) mit Hexafluorisopropanol als mobiler Phase und Polymethylmethacrylat (PMMA) als Standard.

Die Herstellung der hyperverzweigten Polyetheramine B) erfolgt zumeist in einem Druckbereich von 0,1 mbar bis 20 bar, bevorzugt von 1 mbar bis 5 bar, in Reaktoren oder Reaktorkaskaden, die im Batchbetrieb, halbkontinuierlich oder kontinuierlich betrieben werden.

Durch die vorgenannte Einstellung der Reaktionsbedingungen und gegebenenfalls durch die Wahl des geeigneten Lösemittels können die erfindungsgemäßen Produkte nach der Herstellung ohne weitere Reinigung weiterverarbeitet werden.

Falls erforderlich, kann das Reaktionsgemisch einer Entfärbung, beispielsweise durch Behandlung mit Aktivkohle oder Metalloxiden, wie z.B. Aluminiumoxid, Siliciumoxid, Magnesiumoxid, Zirkonoxid, Boroxid oder Gemischen davon, in Mengen von beispielsweise von 0,1 bis 50 Gew.-%, bevorzugt von 0,5 bis 25 Gew.-%, besonders bevorzugt von 1 bis 10 Gew.-% bei Temperaturen von beispielsweise von 10 bis 100°C, bevorzugt von 20 bis 80°C und besonders bevorzugt von 30 bis 60°C unterworfen werden.

Gegebenenfalls kann das Reaktionsgemisch auch zur Entfernung von eventuell vorhandenen Ausfällungen filtriert werden.

In einer weiteren bevorzugten Ausführungsform wird das Produkt gestrippt, das heißt von niedermolekularen, flüchtigen Verbindungen befreit. Dazu kann nach Erreichen des gewünschten Umsatzgrades der Katalysator optional desaktiviert und die niedermolekularen flüchtigen Bestandteile, z.B. Wasser, die als Einsatzstoff verwendeten Aminoalkohole oder leichtflüchtige oligomere oder cyclische Verbindungen destillativ, gegebenenfalls unter Einleitung eines Gases, vorzugsweise Stickstoff, oder Edelgase, gegebenenfalls bei vermindertem Druck, entfernt werden.

Komponente C

Erfindungsgemäß enthalten die thermoplastischen Formmassen mindestens ein amorphes Oxid und/oder Oxidhydrat mindestens eines Metalls oder Halbmetalls mit einem zahlengewichteten mittleren Durchmesser der Primärpartikel von 0,5 bis 20 nm.

Amorph bedeutet dabei, dass die Oxide und/oder Oxidhydrate C) der erfindungsgemä-βen thermoplastischen Formmassen im wesentlichen nicht kristallin sind, vorzugsweise vollständig nicht kristallin. Demzufolge kommen Silikate im mineralogischen Sinn, insbesondere Schichtsilikate, für die vorliegende Erfindung als Komponente C) nicht in Betracht. Die Oxide und/oder Oxidhydrate der vorliegenden Erfindung werden synthetisch erhalten, vorzugsweise nasschemisch.

Verfahren zur Herstellung geeigneter amorpher Oxide und/oder Oxidhydrate sind dem Fachmann grundsätzlich bekannt. Die Oxide und/oder Oxidhydrate werden vorzugsweise ausgehend von einer Ausgangsverbindung enthaltend mindestens ein Metall und/oder Halbmetall M durch Hydrolyse gebildet, wodurch sich im Rahmen einer Polykondensation ein Oxid und/oder Oxidhydrat bildet. Im Laufe der Polykondensation bilden sich die Oxide und/oder Oxidhydrate in partikulärer Form aus, wobei zuerst so genannte Primärpartikel entstehen, welche je nach Reaktionsbedingungen entweder in Form einer kolloidalen Lösung von Partikeln erhalten werden (im folgenden Sol genannt), oder die Primärpartikel bilden durch weitergehende Vernetzung untereinander eine Verknüpfung aus, wodurch ein sogenanntes Gel entsteht, in dem jedoch noch isolierte Primärpartikel erkennbar sind.

Die Reaktionsbedingungen steuern das Wachstum der Primärpartikel versus deren Vernetzung untereinander und sind dem Fachmann grundsätzlich bekannt. Sofern als pH-Wert der Polykondensation ein pH-Wert kleiner 7 gewählt wird, erfolgt häufig die Bildung eines Gels. Sofern ein pH-Wert größer 7 gewählt wird, erfolgt bei Abwesenheit von Salzen häufig die Bildung von Solen (kolloidalen Lösungen von Primärpartikeln). Parameter, welche den Reaktionsverlauf und somit die Bildung der Primärpartikel und die Bildung von Gelen beeinflussen sind insbesondere: Struktur der Ausgangsverbindung, Lösungsmittel, pH-Wert, Hilfsstoffe, Katalysatoren, Temperatur. Da die erfindungsgemäßen thermoplastischen Formmassen ein Oxid und/oder Oxidhydrat mit einer Teilchengröße der Primärpartikel von 0,5 bis 20 nm enthalten, ist die Reaktion so zu steuern, dass ein weitgehende Agglomeration oder das Wachstum der Primärpartikel über den genannten Bereich hinaus vermieden wird. Entsprechende Reaktionsführungen sind dem Fachmann bekannt und üblichen Textbüchern über Sol-Gel-Chemie zu entnehmen.

Als Metalle und/oder Halbmetalle kommen solche in Betracht, die fähig sind, ausgehend von Ausgangsverbindungen enthaltend das Metall und/oder Halbmetall Oxide und/oder Oxidhydrate in Gegenwart von protischen Lösungsmitteln, insbesondere Wasser, zu bilden, d.h. solche Metalle und/oder Halbmetalle M, für die hydrolysierbare und polykondensierbare Ausgangsverbindungen bekannt oder zugänglich, d.h. mit bekannten Methoden erhältlich, sind. Beispiele für geeignete Metalle und/oder Halbmetalle M sind Si, Ti, Fe, Ba, Zr, Zn, Al, Ga, In, Sb, Bi, Cu, Ge, Hf, La, Li, Nb, Na, Ta, Y, Mo, V und Sn. Vorzugsweise wird das Metall und/oder Halbmetall M ausgewählt aus Si, Ti, und Ba, insbesondere Si.

Ein Verfahren zur Herstellung der Komponente C) umfasst vorzugsweise folgende Schritte:

- Mindestens eine Ausgangsverbindung wird zusammen mit einem protischen Lösungsmittel und ggf. weiteren Additiven bereitgestellt;
- Die Ausgangsverbindung wird hydrolysiert, wobei eine Polykondesationsreaktion abläuft, unter Erhalt der Komponente C);
- Gegebenenfalls wird das Lösungsmittel von der Komponente C) abgetrennt.

Zur Herstellung der erfindungsgemäßen thermoplastischen Formmassen wird Komponente C) mit Komponente A) oder mit einer Vorstufe von Komponente A) in Kontakt gebracht, vorzugsweise in Komponente A) homogen verteilt.

In einer ersten bevorzugten Ausführungsform ist Komponente C) aus einem Sol erhältlich.

Unter Sol ist im Rahmen der vorliegenden Erfindung eine kolloidale Lösung von Primärpartikeln zu verstehen, die vorzugsweise überwiegend nicht agglomeriert, insbesondere im wesentlichen nicht agglomeriert, d.h. im wesentlichen isoliert, vorliegen. Die Sole sind im Rahmen der vorliegenden Erfindung im wesentlichen stabile disperse Systeme, d.h. über einen Zeitraum von mehreren Minuten, vorzugsweise mehreren Stunden, insbesondere mehrere Tage stabil. Kolloidale Lösung meint dabei in einem Dispersionsmedium in kolloidaler Form dispergierte Primärpartikel.

Unter Lösungsmittel soll dabei das dispergierende Medium, d.h. die kontinuierliche flüssige Phase verstanden werden, in der die Partikel im kolloidalen Zustand vorliegen.

Verfahren zur Herstellung der oben definierten Sole sind dem Fachmann bekannt und werden beispielsweise in Iler, Ralph K. "The Chemistry of Silica", Kapitel 4: "Colloidal Silica-Concentrated Sols", John Wiley & Sons, New York, 1979, ISBN:0-471-02404-X, Seiten 331-343 beschrieben.

Unter den dort aufgeführten Verfahren zur Herstellung von Solen, insbesondere von Solen auf Basis von $SiO_2$, sind die folgenden bevorzugt:

- Neutralisation von löslichen Silikaten durch Säuren
- Elektrodialyse
- Ionenaustausch
- Hydrolyse von Vorstufen enthaltend das Metall und/oder Halbmetall

In einer besonders bevorzugten Ausführungsform werden die Sole durch ein Ionenaustausch-Verfahren erhalten. Beim Ionenaustausch-Verfahren wird mindestens eine Vorstufe, insbesondere Natriumsilikat, einem Ionenaustausch unterzogen, wobei die Verwendung eines Ionenaustauscherharzes bevorzugt ist, und zu Solen und gegebenenfalls Gelen von Oxiden und/oder Oxidhydraten von Metallen und/oder Halbmetallen umgesetzt. Derartige Verfahren sind beispielsweise im Rahmen der vorgenannten Literaturstelle auf Seite 333 bis 334 unter "Ion Exchange" beschrieben.

Die Sole der vorliegenden Erfindung können herstellungsbedingt Verunreinigungen enthalten, die auf weitere Metalle wie Na, K und/oder Al zurückzuführen sind.

Vorzugsweise wird Komponente C) in einer aus einem Sol erhaltenen Form mit Komponente A) in Kontakt gebracht, wobei besonders bevorzugt das im Sol enthaltene Oxid und/oder Oxidhydrat vor dem Einsatz in einer geeigneten Form vom Lösungsmittel abgetrennt wird, insbesondere durch Trocknen mittels üblicher, dem Fachmann bekannter Trocknungsverfahren. Besonders bevorzugt wird die Komponente C) in partikulärer Form ohne Lösungsmittel mit Komponente A) vermischt.

Gemäß einer weiteren, zweiten bevorzugten Ausführungsform ist Komponente C) aus einem Sol-Gel-Verfahren erhältlich. Vorzugsweise wird Komponente C) dabei als Gel oder in einer aus einem Gel erhaltenen Form mit Komponente A) in Kontakt gebracht.

Unter Gel ist im Rahmen der vorliegenden Erfindung ein erfindungsgemäßes Oxid und/oder Oxidhydrat zu verstehen, in dem die Primärpartikel zumindest partiell miteinander verknüpft sind. Ein Gel im Sinne der vorliegenden Erfindung ist im Unterschied zu einem wie oben definierten Sol nicht kolloidal dispergierbar.

Sol-Gel-Verfahren zur Herstellung von Oxiden und/oder Oxidhydraten von Metallen und/oder Halbmetallen sind dem Fachmann bekannt. Solche Sol-Gel-Verfahren werden beispielsweise in Sanchez et al., Chemistry of Materials 2001, 13, 3061-3083 beschrieben.

Ein Sol-Gelverfahren zur Herstellung der Komponente C) umfasst vorzugsweise folgende Schritte:

- Mindestens eine Ausgangsverbindung wird zusammen mit einem Lösungsmittel und ggf. weiteren Additiven bereitgestellt;
- Die Ausgangsverbindung wird hydrolysiert, wobei eine Polykondesationsreaktion abläuft, unter Erhalt der Komponente C) in Form eines Gels;
- Gegebenenfalls wird das Lösungsmittel von der Komponente C) abgetrennt.

Die Gele können außerdem ausgehend von den weiter oben beschriebenen Solen durch Vernetzung der kolloidalen Teilchen hergestellt werden. Demzufolge unterscheiden sich Verfahren zur Herstellung der Sole gegebenenfalls nur durch Variation bestimmter Verfahrensparameter wie zum Beispiel dem pH-Wert von den Verfahren zur Herstellung von Gelen.

In einer besonders bevorzugten Ausführungsform werden als Ausgangsverbindungen solche eingesetzt, die das Metall und/oder Halbmetall M und mindestens drei Alkoxylatgruppen RO, die an M gebunden sind, enthalten. Vorzugsweise enthält die Ausgangsverbindung keine anderen Liganden als RO. In einer bevorzugten Ausführungsform werden Ausgangsverbindungen der Form $M(OR)_n$ eingesetzt, wobei n = 2, 3 oder 4 besonders bevorzugt ist und n = 4 ganz besonders bevorzugt ist.

Die Alkoxylatgruppen RO können unabhängig voneinander identisch oder verschieden sein, wobei in letzterem Fall die Struktur $M(OR)_r(OR^1)_t$, wobei r = 2 oder 3 und t = 1 oder 2 bevorzugt ist. Vorzugsweise ist r + t = 4.

Im Allgemeinen sind R und $R^1$ lineare oder verzweigte aliphatische Gruppen, die von 1 bis 12 Kohlenstoffatome umfassen. Vorzugsweise enthalten die linearen oder verzweigten aliphatische Gruppen R und $R^1$ von 2 bis 8 Kohlenstoffatome. Geeignete Gruppen R und $R^1$ sind lineare oder verzweigte aliphatische Alkylgruppen, beispielsweise Methyl, Ethyl, n-Propyl, iso-Propyl, n-Butyl, iso-Butyl, n-Pentyl, n-Hexyl und n-Octyl. Weitere geeignete Gruppen R sind aromatische Kohlenwasserstoffgruppen, insbesondere Phenyl. Vorzugsweise hat R und $R^1$ von 2 bis 4 Kohlenstoffatome und wird vorzugsweise ausgewählt aus Ethyl, n-Propyl, iso-Propyl, n-Butyl und iso-Butyl.

In einer weiteren bevorzugten Ausführungsform werden zwei oder mehr als zwei unterschiedliche Ausgangsverbindungen jeweils enthaltend mindestens ein Metall- oder Halbmetall M eingesetzt, wobei mindestens eine der Ausgangsverbindungen ein M ausgewählt aus Si, Ti, Fe, Ba, Zr, Zn, Al, Ga, In, Sb, Bi, Cu, Ge, Hf, La, Li, Nb, Na, Ta, Y, Mo, V und Sn enthält. Hierdurch werden gemischte Oxide und/oder Oxidhydrate erhalten.

Vorzugsweise wird zumindest eine der Ausgangsverbindungen ausgewählt aus den oben aufgeführten Metall- oder Halbmetallalkoxylaten. Die zweite und ggf. weitere Ausgangsverbindungen bestehen dann vorzugsweise aus löslichen Salzen von Metallen und/oder Halbmetallen, beispielsweise Acetate oder Hydroxide, die mit den Metallen und/oder Halbmetallen gemischte Oxide bilden.

Bevorzugte Ausgangsverbindungen für das Sol-Gel-Verfahren sind Tetraethylorthosilikat (TEOS), Titantetraisopropoxid (TPOT) und Titantetra-n-butoxid. Es ist außerdem bevorzugt eine Mischung aus TPOT und Bariumhydroxid als Ausgangsverbindungen einzusetzen.

Als Katalysatoren für die Herstellung der Gele kommen vorzugsweise Säuren zum Einsatz, vorzugsweise starke Säuren wie zum Beispiel Salzsäure oder Schwefelsäure. Das Sol-Gel-Verfahren wird dabei vorzugsweise bei pH-Werten unter 5, beispielsweise von 1 bis 4, vorzugsweise von 2 to 4, durchgeführt.

In einer weiteren bevorzugten Ausführungsform werden als Vorstufen der Komponente C) Salze von sauerstoffhaltigen Säuren auf Basis des Metalls und/oder Halbmetalls M oder die Säuren selbst eingesetzt, vorzugsweise solche der Struktur ($MO_x \cdot n\,H_2O$), wobei x vorzugsweise 2 ist. Ein bekanntes Beispiel für eine solche Säure ist Kieselsäure. Ausgehend von dieser Vorstufe wird das Sol bzw. das Gel in bekannter Weise in Gegenwart eines Lösungsmittels, vorzugsweise Wasser, durch Hydrolyse, vorzugsweise katalysiert durch einen Katalysator, erhalten. Als Katalysator kommen Säuren und Basen in Betracht.

Geeignete Lösungsmittel für die beschriebenen Verfahren sind dem Fachmann bekannt. Grundsätzlich kommen alle bekannten protischen Lösungsmittel als Lösungsmittel für die beschriebenen Herstellungsverfahren der Komponente C) in Betracht. Geeignete Lösungsmittel sind beispielsweise Wasser, Alkohole und Mischungen aus Wasser und Alkoholen. Das bevorzugte Lösungsmittel ist Wasser.

Die Komponente C) ist in der eingesetzten Form, d.h. vor dem In-Kontakt-Bringen mit Komponente A), porös. Poröse Materialien enthalten Hohlräume, insbesondere Poren von verschiedener Form und Größe.

Vorzugsweise ist Komponente C) mikroporös. Mikroporöse Materialien sind solche, die Mikroporen enthalten. Mikroporen sind im Rahmen der vorliegenden Erfindung Poren mit Durchmessern von weniger als 2 nm in Übereinstimmung mit der IUPAC Klassifizierung. Solche mikroporöse Materialien haben große spezifische Oberflächen.

Um die Mikroporosität zu bestimmen zieht der Fachmann insbesondere die Adsorptionsisothermen von Argon (Ar) heran. Zur Bestimmung der Mikroporosität wird dabei der Bereich geringen Argon-Druckes analysiert.

Eine mikroporöse Verbindung ist im Rahmen der vorliegenden Erfindung dadurch charakterisiert, dass sie eine Menge von mindestens 30 $cm^3$ Argon pro Gramm Probenmaterial (Komponente C in der eingesetzten Form) in einer volumetrischen Messung der Adsorptionsisotherme bei Standardtemperatur und -druck (STP) bei einem Absolutdruck von 2670 Pa absorbiert. Die Adsorptionsisotherme wir dabei bei einer Temperatur von 87,4 K mit einem Gleichgewichtsintervall von 10 s gemäß DIN 66135-1 aufgenommen.

Vorzugsweise absorbiert Komponente C) in der eingesetzten Form mindestens 60 $cm^3$ Ar pro Gramm Probenmaterial gemäß der oben beschriebenen Methode bei einem Absolutdruck von 2670 Pa und einer Temperatur von 87,4 K gemäß to DIN 66135-1. Besonders bevorzugt adsorbiert Komponente C) in der eingesetzten Form mindestens 80 $cm^3$ pro Gramm Probenmaterial gemäß der oben beschriebenen Methode bei einem Absolutdruck von 2670 Pa und Temperatur von 87,4 K gemäß to DIN 66135-1, insbesondere mindestens 100 $cm^3/g$.

Darüber hinaus ist es bevorzugt, wenn Komponente C) in der eingesetzten Form mindestens 50 $cm^3$, vorzugsweise mindestens 70 $cm^3$, insbesondere mindestens 90 $cm^3$ Ar pro Gramm Probenmaterial gemäß der oben beschriebenen Methode bei einem Absolutdruck 1330 Pa und einer Temperatur von 87,4 K gemäß to DIN 66135-1 adsorbiert.

Aus strukturellen Gründen weisen geeignete Oxide und/oder Oxidhydrate von Metallen und/oder Halbmetallen eine obere Grenze bezüglich der unter den beschriebenen Bedingungen adsorbierten Menge Argon auf. Eine solche obere Grenze ist beispielsweise 500 $cm^3$ Ar pro Gramm Probenmaterial gemäß der oben beschriebenen Methode bei einem Absolutdruck von 2670 Pa und einer Temperatur von 87,4 K gemäß to DIN 66135-1 and beispielsweise 400 $cm^3$ Ar pro Gramm Probenmaterial bei einem Absolutdruck von 1330 Pa und einer Temperatur von 87,4 K.

Um den Volumenanteil der Mikroporen und die spezifische Oberfläche der Mikroporen zu bestimmen, kommen ausgehend von den beschriebenen Argon Adsorptionsisothermen verschiedene Methoden in Betracht.

Eine geeigente Methode ist die DFT (density functional theory) Methode nach Olivier and Conklin, die in Olivier, J. P., Conklin, W. B., and v. Szombathely, M.: "Characterization of Porous Solids III" (J. Rouquerol, F. Rodrigues-Reinoso, K. S. W. Sing, and K. K. Unger, Eds.), p. 81 Elsevier, Amsterdam, 1994, beschrieben wird. Zu dieser Methode wird im Folgenden verkürzt als Olivier-Conklin-DFT Methode Bezug genommen.

Vorzugsweise weist Komponente C) in der eingesetzten Form eine kumulative spezifische Oberfläche von Mikroporen (Poren kleiner 2 nm) von mindestens 40 $m^2/g$, vorzugsweise mindestens 60 $m^2/g$, insbesondere mindestens 100 $m^2/g$, beispielsweise mindestens 150 $m^2/g$ bestimmt mittels Olivier-Conklin-DFT-Methode angewendet auf die Ar Adsorptionsisotherme, die bei einer Temperatur von 87,4 K gemäß DIN 66135-1 aufgenommen wurde, wobei folgende Modellparameter für die mathematische Anpassung gewählt werden: schlitzförmige Poren, nicht-negative Regularisierung, keine Glättung.

Geeignete Komponenten C) weisen strukturell bedingt eine obere Grenze betreffend die kumulative spezifische Oberfläche von Mikroporen auf, die beispielsweise ungefähr 600 $m^2/g$ beträgt. Vorzugsweise weist Komponente C) in der eingesetzten Form eine kumulative spezifische Oberfläche von Mikroporen von 40 bis 500 $m^2/g$, insbesondere von 100 bis 400 $m^2/g$ auf, jeweils bestimmt nach der Olivier-Conklin-DFT-Methode.

Komponente C) in der eingesetzten Form kann außerdem durch die Methode von Brunauer, Emmet und Teller (BET) charakterisiert werden. Unter BET-Methode wird im Rahmen der vorliegenden Erfindung die Analyse der Stickstoff-Adsorptionsisotherme bei einer Temperatur von 77,35 K gemäß DIN 66131 verstanden. Die BET-Methode ist nicht selektiv für Mikroporen. Die so erhaltenen spezifische Oberfläche charakterisiert auch Poren im Bereich von 2 bis 50 nm (Makroporen).

Vorzugsweise weist Komponente C) in der eingesetzten Form eine spezifische Oberfläche von mindestens 150 $m^2/g$, besonders bevorzugt mindestens 250 $m^2/g$, insbesondere mindestens 350 $m^2/g$ gemäß der BET-Methode auf. Strukturell bedingt weisen im Rahmen der vorliegenden Erfindung geeignete Komponenten C) eine Obergrenze der spezifischen Oberfläche nach BET auf, die im Bereich von ungefähr 800 $m^2/g$ liegt, die unter anderem in bekannter Weise von der gewählten mittleren Teilchengröße abhängt und nicht zu groß gewählt werden sollte.

Vorzugsweise weist Komponente C) eine spezifische Oberfläche BET nach DIN 66131 von 150 bis 700 $m^2/g$, insbesondere von 200 bis 500 $m^2/g$, auf.

Die Oxide und/oder Oxidhydrate C) können ein einziges Metall und/oder Halbmetall enthalten oder Oxide und/oder Oxidhydrate einer Kombination aus zwei oder mehr als zwei Metallen und/oder Halbmetallen M ausgewählt aus Si, Ti, Fe, Ba, Zr, Zn, Al, Ga, In, Sb, Bi, Cu, Ge, Hf, La, Li, Nb, Na, Ta, Y, Mo, V und Sn darstellen. Die Oxide und/oder Oxidhydrate umfassen dabei sauerstoffverknüpfte oxidische polymere Netzwerke, die partiell noch Hydroxylgruppen als Liganden und/oder chemisch gebundenes Wasser enthalten können (Oxidhydrate im letzteren Fall). Darüber hinaus kann die Komponente C) Verunreinigungen in Form von anderen Ionen als M, insbesondere Alkali- und/oder Erdalkalimetalle, sowie nicht hydrolysierte oder nicht hydrolysierbare Liganden aufweisen.

In einer besonders bevorzugten Ausführungsform enthalten die erfindungsgemäßen thermoplastischen Formmassen als Komponente C) ein amorphes Oxid und/oder Oxidhydrat von Silicium mit einem zahlengewichteten mittleren Durchmesser der Primärpartikel von 0,5 bis 20 nm. Das $SiO_2$ kann noch OH-Liganden und/oder Wasser enthalten.

Vorzugsweise weist Komponente C) in der eingesetzten Form einen zahlengewichteten mittleren Durchmesser der Primärpartikel von 1 bis 15 nm, vorzugsweise von 1 bis 10 nm, insbesondere von 2 bis 8 nm, auf.

Vorzugsweise wird der zahlengewichtete mittlere Durchmesser der Primärpartikel so gewählt, dass dieser kleiner ist als der z-mittlere Gyrationsradius $R_g$ der Komponente A). Insbesondere weist Komponente C) einen zahlengewichteten mittleren Durchmesser der Primärteilchen von mindestens 1 nm und weniger als $R_9$ auf, besonders bevorzugt von 1 nm bis ($R_g$ minus 3nm).

Der z-gemittelte Gyrationsradius $R_g$ wird im Rahmen der vorliegenden Erfindung wie folgt berechnet:

$$R_g = \left(\frac{2M_n}{3}\right)^{0.5} b \ ,$$

wobei b die Segmentlänge einer Monomereinheit der Komponente A) darstellt. Der Fachmann berechnet b als atomaren Abstand zwischen den beiden Enden einer Monomereinheit mittels molecular modelling Berechnungen. $M_n$ bezieht sich auf das zahlengewichtete Molekulargewicht, das mittels Gelpermeationschromatographie (GPC) gemäß ISO 16014-4 bei einer Temperatur von 140 °C in Schwefelsäure als Lösungsmittel bestimmt wird.

Für die Bestimmung von mittleren Teilchendurchmessern kommen verschiedene Bestimmungsmethoden in Betracht. Der mittlere Teilchendurchmesser von kolloidalen Lösungen kann bekanntlich insbesondere mittels Ultrazentrifuge bestimmt werden.

Der zahlengewichtete mittlere Teilchendurchmesser von Nanopartikeln in einer Polymermatrix wird im Rahmen der vorliegenden Erfindung mittels Transmissionselektronenmikroskopie (TEM) bestimmt, in dem ein repräsentativer, d.h. statistisch aussagekräftiger, Mikrotomschnitt untersucht wird.

Im Rahmen der vorliegenden Erfindung soll unter dem zahlengewichteten mittleren Teilchendurchmesser der Median-Wert $d_{50}$ verstanden werden, der durch bildanalytische Auswertung einer TEM-Messung der thermoplastischen Formmasse erhalten wird, vorzugsweise durch Auswertung eines Mikrotomschnittes mit einer Dicke von 70 nm oder weniger. Der Fachmann wählt die Dicke, Größe und Anzahl der Schnitte so, dass ein statistisch bedeutsamer Mittelwert erhalten wird, insbesondere muss die Zahl der herangezogenen Teilchen der Komponente C) mindestens 100 betragen. Bei der Auswertung ist zu berücksichtigen, dass für die Bestimmung des Mittelwertes lediglich die Komponente C) herangezogen wird, sofern weitere partikuläre Zusatzstoffe enthalten sind.

Bei der Bestimmung der $d_{50}$-Werte ist außerdem zu berücksichtigen, dass die Durchmesser der Primärpartikel in die Bestimmung eingehen und nicht die Größe von Agglomeraten oder anderen Überstrukturen.

Teilchen mit einer Größe von mehr als 100 nm sind bei der Auswertung nicht zu berücksichtigen, da sie nicht als nanopartikuläre Oxide und/oder Oxidhydrate im Sinne der Erfindung aufzufassen sind. Oxidische Pigmente können beispielsweise als Komponente F) in Form von Pigmenten in den erfindungsgemäßen Formmassen anwesend sein.

Der Teilchendurchmesser ist der kleinste Durchmesser durch das geometrische Zentrum des Teilchens, das

im TEM-Bild abgebildet ist.

Vorzugsweise sind die Partikel der Komponente C) weitgehend isotrop. Vorzugsweise weist Komponente C) ein mittleres Aspektverhältnis des längsten zum kürzesten Durchmesser (Länge/Breite) durch das geometrische Zentrum des Partikels von 4 zu 1, insbesondere von 3 zu 1, besonders bevorzugt von 2 zu 1 auf. Besonders bevorzugt ist das mittlere Aspektverhältnis der Komponente C) ungefähr 1, insbesondere von 1 bis 1,4. Das mittlere Aspektverhältnis wird analog zum mittleren Teilchendurchmesser bildanalytisch mittels TEM bestimmt und wird im Rahmen der vorliegenden Erfindung als d50-Wert ermittelt und angegeben.

Im Rahmen der vorliegenden Erfindung ist es außerdem bevorzugt, wenn die räumliche Verteilung der Nanopartikel in der thermoplastischen Formmasse weitgehend homogen ist, d. h. die Teilchen räumlich weitgehend gleichmäßig verteilt vorliegen

Darüber hinaus ist es bevorzugt, wenn die Breite der Verteilung der Teilchendurchmesser relativ begrenzt ist. Mit anderen Worten: die Komponente C) weist bevorzugt eine enge Teilchengrößenverteilung auf, insbesondere liegen die Teilchendurchmesser im wesentlichen im Bereich von 1 bis 20 nm, besonders bevorzugt von 1 bis 10 nm, ganz besonders bevorzugt von 2 bis 8 nm. Ganz besonders bevorzugt ist die Verteilung der Teilchengröße von Komponente C) im Wesentlichen monomodal und eng, d.h. die Verteilung der Teilchengröße von Komponente C) ähnelt einer Poisson-Verteilung.

Komponente D

Die erfindungsgemäßen thermoplastischen Formmassen können in einer Ausführungsform als Komponente D) des Weiteren mindestens ein Polyethylenimin enthalten. Sofern ein Polyethylenimin D) eingesetzt wird, enthalten die erfindungsgemäßen thermoplastischen Formmassen in einer bevorzugten Ausführungsform von 0,01 bis 30 Gew.-% mindestes eines Polyethylenimin-Homopolymerisats oder -Copolymerisates. Vorzugsweise beträgt der Anteil von Komponente D) von 0,3 bis 4 Gew.-% und insbesondere von 0,3 bis 3 Gew.-% bezogen auf die Summe der Gew.-% aus A) bis D).

Die erfindungsgemäßen thermoplastischen Formmassen enthalten im Rahmen dieser Ausführungsform besonders bevorzugt von 55 bis 99,7 Gew.-% der Komponente A), von 0,1 bis 15 Gew.-% der Komponente B), von 0,1 bis 15 Gew.-% der Komponente C) und von 0,1 bis 15 Gew.-% der Komponente D), wobei die Summe der Gewichtsprozente der Komponenten A) bis D) 100 Gew.-% ergibt.

Unter Polyethyleniminen im Sinne der vorliegenden Erfindung sollen sowohl Homo- als auch Copolymerisate verstanden werden, welche beispielsweise nach den Verfahren in Ullmann's Encyclopedia of Industrial Chemistry, "Aziridines", electronic release (Artikel veröffentlicht am 15.12.2006) oder gemäß WO-A 94/12560 erhältlich sind.

Die Homopolymerisate sind im allgemeinen durch Polymerisation von Ethylenimin (Aziridin) in wässriger oder organischer Lösung in Gegenwart von säureabspaltenden Verbindungen, Säuren oder Lewis-Säuren erhältlich. Derartige Homopolymerisate sind verzweigte Polymere, die in der Regel primäre, sekundäre und tertiäre Aminogruppen im Verhältnis von ca. 30 % zu 40 % zu 30 % enthalten. Die Verteilung der Aminogruppen kann mittels $^{13}C$-NMR Spektroskopie bestimmt werden.

Als Comonomere werden vorzugsweise Verbindungen eingesetzt, welche mindestens zwei Aminofunktionen aufweisen. Als geeignete Comonomere seien beispielsweise Alkylendiamine mit 2 bis 10 C-Atomen im Alkylenrest genannt, wobei Ethylendiamin und Propylendiamin bevorzugt sind. Weiterhin geeignete Comonomere sind Diethylentriamin, Triethylentetramin, Tetraethylenpentamin, Dipropylentriamin, Tripropylentetramin, Dihexamethylentriamin, Aminopropylethylendiamin und Bisaminopropylethylendiamin.

Polyethylenimine weisen üblicherweise ein mittleres Molekulargewicht (Gewichtsmittel) von 100 bis 3.000.000, vorzugsweise von 800 bis 2.000.000 auf (bestimmt mittels Lichtstreuung).

Darüber hinaus eignen sich vernetzte Polyethylenimine, die durch Reaktion von Polyethyleniminen mit bi- oder polyfunktionellen Vernetzern erhältlich sind, welche als funktionelle Gruppe mindestens eine Halogenhydrin-, Glycidyl-, Aziridin-, Isocyanateinheit oder ein Halogenatom aufweisen. Als Beispiele seinen Epichlorhydrin oder Bischlorhydrinether von Polyalkylenglykolen mit 2 bis 100 Ethylenoxid- und/oder Propylenoxid-Einheiten sowie die in der DE-A 19 93 17 20 und US 4 144 123 aufgeführten Verbindungen genannt. Verfahren zur Herstellung von vernetzten Polyethyleniminen sind u.a. aus den o.g. Schriften sowie EP-A 895 521 und EP-A 25 515 bekannt. Weiterhin sind gepfropfte Polyethylenimine geeignet, wobei als Pfropfmittel sämtliche Verbindungen eingesetzt werden können, die mit den Amino- bzw. Iminogruppen der Polyethylenimine reagieren können. Geeignete Pfropfmittel und Verfahren zur Herstellung von gepfropften Polyethyleniminen sind beispielsweise der EP-A 675 914 zu entnehmen.

Ebenso geeignete Polyethylenimine sind amidierte Polymerisate, die üblicherweise durch Umsetzung von Polyethyleniminen mit Carbonsäuren, deren Ester oder Anhydride, Carbonsäureamide oder Carbonsäurehalogenide erhältlich sind. Je nach Anteil der amidierten Stickstoffatome in der Polyethyleniminkette können die amidierten Polymerisate nachträglich mit den genannten Vernetzern vernetzt werden. Vorzugsweise werden hierbei bis zu 30 % der Aminofunktionen amidiert, damit für eine anschließende Vernetzungsreaktion noch genügend primäre und/oder sekundäre Stickstoffatome zur Verfügung stehen.

Außerdem eignen sich alkoxylierte Polyethylenimine, die beispielsweise durch Umsetzung von Polyethylenimin mit Ethylenoxid und/oder Propylenoxid erhältlich sind. Auch derartige alkoxylierte Polymerisate sind anschließend vernetzbar.

Als weitere geeignete Polyethylenimine seien hydroxylgruppenhaltige Polyethylenimine und amphotere Polyethylenimine (Einbau von anionischen Gruppen) genannt sowie lipophile Polyethylenimine, die in der Regel durch Einbau langkettiger Kohlenwasserstoffreste in die Polymerkette erhalten werden. Verfahren zur Herstellung derartiger Polyethylenimine sind dem Fachmann bekannt, so dass sich weitere Einzelheiten hierzu erübrigen.

Die Polyethylenimine können als solche oder in Lösung, insbesondere in wässriger Lösung, eingesetzt werden.

Komponente E

In einer bevorzugten Ausführungsform enthalten die erfindungsgemäßen thermoplastischen Formmassen des Weiteren als Komponente E) mindestens einen faserförmigen Füllstoff ungleich Komponente A) bis D), vorzugsweise faserförmige Füllstoffe, insbesondere Glasfasern.

Die Komponente E) weist vorzugsweise einen zahlengewichteten mittleren Teilchendurchmesser von 0,01 bis 100 μm, insbesondere von 0,5 bis 50 μm auf. Die Komponente E) weist darüber hinaus vorzugsweise ein Aspektverhältnis von 5 bis 10.000, insbesondere von 10 bis 5000 auf.

Die thermoplastischen Formmassen enthalten in einer besonders bevorzugten Ausführungsform von 15 bis 98,8 Gew.-% der Komponente A), von 0,1 bis 10 Gew.-% der Komponente B), von 0,1 bis 10 Gew.-% der Komponente C), von 0 bis 5 Gew.-% der Komponente D) und von 1 bis 70 Gew.-% der Komponente E), wobei die Summe der Gewichtsprozente der Komponenten A) bis E) 100 Gew.-% ergibt.

Als faser- oder teilchenförmige Füllstoffe E) seien folgende Verbindungen mit einem zahlengewichteten mittleren Teilchendurchmesser von 0,1 bis 50 μm genannt: Kohlenstofffasern, Glasfasern, Glaskugeln, amorphe Kieselsäure, Calciumsilicat, Calciummetasilicat, Magnesiumcarbonat, Kaolin, Kreide, gepulverter Quarz, Glimmer, Bariumsulfat und Feldspat. Die genannten Verbindungen werden vorzugsweise in Mengen bis zu 40 Gew.-%, insbesondere von 1 bis 15 Gew.-% eingesetzt.

Als bevorzugte faserförmige Füllstoffe seien Glasfasern, Kohlenstofffasern, Kohlenstoff-Nanofasern und -Nanoröhren, Aramid-Fasern und Kaliumtitanat-Fasern genannt, wobei Glasfasern, insbesondere Glasfasern in Form von E-Glas, besonders bevorzugt sind. Diese können als Rovings oder Schnittglas in den handelsüblichen Formen eingesetzt werden. Die genannten faserförmigen Füllstoffe E) können einzeln eingesetzt werden, die erfindungsgemäßen Formmassen können aber auch zwei oder mehrere faserförmigen Füllstoffe E) enthalten.

Die faserförmigen Füllstoffe können zur besseren Verträglichkeit mit dem Thermoplasten mit einer Silanverbindung oberflächlich vorbehandelt sein.

Geeignete Silanverbindungen sind solche der allgemeinen Formel

$$(X-(CH_2)_n)_k-Si-(O-C_mH_{2m+1})_{4-k}$$

in der die Substituenten folgende Bedeutung haben:

X $NH_2$-,

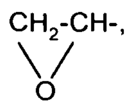

HO-,

n eine ganze Zahl von 2 bis 10, bevorzugt 3 bis 4

m eine ganze Zahl von 1 bis 5, bevorzugt 1 bis 2

k eine ganze Zahl von 1 bis 3, bevorzugt 1

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im allgemeinen in Mengen von 0,01 bis 2, vorzugsweise von 0,025 bis 1,0 und insbesondere von 0,05 bis 0,5 Gew.-% (bezogen auf die faserförmigen Füllstoffe) zur Oberflächenbeschichtung eingesetzt.

Als Komponente E) werden vorzugsweise mineralische Füllstoffe eingesetzt, insbesondere faserförmige mineralische Füllstoffe. Unter mineralischen Füllstoffen sind nicht-amorphe, d. h. im wesentlichen kristalline Füllstoffe zu verstehen, die insbesondere aus natürlichen Ausgangsstoffen gewonnen werden.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein UD-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere mineralische Füllstoffe seien Kaolin, calciniertes Kaolin, Wollastonit, Talkum und Kreide sowie üblicherweise als Füllstoffe eingesetzte plättchen- oder faserförmige Schichtsilikate genannt, die bevorzugt in Mengen von 0,1 bis 10 % eingesetzt werden und im Fall der Schichtsilikate gegebenenfalls in einer oder in zwei Raumdimensionen einen Teilchendurchmesser im Bereich unterhalb von 500 nm, beispielsweise von 20 bis 100 nm, aufweisen können.

Bevorzugt werden hierfür Böhmit, Bentonit, Montmorillonit, Vermiculit, Hektorit und Laponit eingesetzt. Um eine gute Verträglichkeit der plättchenförmigen Nanofüllstoffe mit dem organischen Bindemittel zu erhalten, werden die plättchenförmigen Nanofüllstoffe nach dem Stand der Technik organisch modifiziert. Der Zusatz der plättchenoder nadelförmigen Nanofüllstoffe zu den erfindungsgemäßen Nanokompositen führt zu einer weiteren Steigerung der mechanischen Festigkeit.

Insbesondere wird Talkum verwendet, welches ein hydratisiertes Magnesiumsilikat der Zusammensetzung $Mg_{3[}(OH)_2/Si_4O_{10}]$ oder 3 MgO · 4 SiO2 · $H_2O$ ist. Diese sogenannten Drei-Schicht-Phyllosilikate weisen einen triklinen, monoklinen oder rhombischen Kristallaufbau auf mit blättchenförmigem Erscheinungsbild. An weiteren Spurenelementen können Mn, Ti, Cr, Ni, Na und K anwesend sein, wobei die OH-Gruppe teilweise durch Fluorid ersetzt sein kann.

Besonders bevorzugt wird Talkum eingesetzt, dessen Teilchengrößen zu 99,5 % < 20 μm beträgt. Die Teilchengrößenverteilung wird üblicherweise durch Sedimentationsanalyse bestimmt und beträgt vorzugsweise:

| | |
|---|---|
| < 20 μm | 99,5 Gew.-% |
| < 10 μm | 99 Gew.-% |
| < 5 μm | 85 Gew.-% |
| < 3 μm | 60 Gew.-% |
| < 2 μm | 43 Gew.-%. |

Derartige Produkte sind im Handel als Micro-Talc I.T. extra (Fa. Omya) erhältlich.

Komponente F

Die erfindungsgemäßen thermoplastischen Formmassen können darüber hinaus als Komponente F) weitere Zusatzstoffe enthalten.

Als Komponente F) können die erfindungsgemäßen Formmassen von 0 bis 70, insbesondere bis zu 50 Gew.-% weiterer Zusatzstoffe und Verarbeitungshilfsmittel enthalten, welche verschieden von A) bis E) sind.

Als Komponente F) können die erfindungsgemäßen Formmassen von 0 bis 3, bevorzugt von 0,05 bis 3, vorzugsweise von 0,1 bis 1,5 und insbesondere von 0,1 bis 1 Gew.-% eines Schmiermittels enthalten.

Bevorzugt sind Al-, Alkali-, Erdalkalisalze oder Ester- oder Amide von Fettsäuren mit 10 bis 44 C-Atomen, vorzugsweise mit 14 bis 44 C-Atomen. Die Metallionen sind vorzugsweise Erdalkali und Al, wobei Ca oder Mg besonders bevorzugt sind. Bevorzugte Metallsalze sind Ca-Stearat und Ca-Montanat sowie Al-Stearat. Es können auch Mischungen verschiedener Salze eingesetzt werden, wobei das Mischungsverhältnis beliebig ist.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Pentaerythrittetrastearat.

Es können auch Mischungen verschiedener Ester oder Amide oder Ester mit Amiden in Kombination eingesetzt

werden, wobei das Mischungsverhältnis beliebig ist.

Als weitere Komponenten F) können die erfindungsgemäßen Formmassen Wärmestabilisatoren oder Antioxidantien oder deren Mischungen, ausgewählt aus der Gruppe der Kupferverbindungen, sterisch gehinderter Phenole, sterisch gehinderter aliphatischer Amine und/oder aromatischer Amine, enthalten.

Kupferverbindungen sind in den erfindungsgemäßen PA-Formmassen zu 0,05 bis 3, vorzugsweise 0,1 bis 1,5 und insbesondere 0,1 bis 1 Gew.-% enthalten, vorzugsweise als Cu-(I)-Halogenid, insbesondere in Mischung mit einem Alkalihalogenid, vorzugsweise KJ, insbesondere im Verhältnis 1 : 4, oder eines sterisch gehinderten Phenols oder eines Aminstabilisators oder deren Mischungen enthalten.

Als Salze des einwertigen Kupfers kommen vorzugsweise Kupfer(I)-Acetat, Kupfer(I)-Chlorid, -Bromid und -Jodid in Frage. Sie sind in Mengen von 5 bis 500 ppm Kupfer, vorzugsweise 10 bis 250 ppm, bezogen auf Polyamid, enthalten.

Die vorteilhaften Eigenschaften werden insbesondere erhalten, wenn das Kupfer in molekularer Verteilung im Polyamid vorliegt. Dies wird erreicht, wenn man der Formmasse ein Konzentrat zusetzt, das Polyamid, ein Salz des einwertigen Kupfers und ein Alkalihalogenid in Form einer festen, homogenen Lösung enthält. Ein typisches Konzentrat besteht z.B. aus 79 bis 95 Gew.-% Polyamid und 21 bis 5 Gew.-% eines Gemisches aus Kupferjodid oder -bromid und Kaliumjodid. Die Konzentration der festen homogenen Lösung an Kupfer liegt bevorzugt zwischen 0,3 und 3, insbesondere zwischen 0,5 und 2 Gew.-%, bezogen auf das Gesamtgewicht der Lösung und das molare Verhältnis von Kupfer (I)-Jodid zu Kaliumjodid liegt zwischen 1 und 11,5, vorzugsweise zwischen 1 und 5.

Geeignete Polyamide für das Konzentrat sind Homopolyamide und Copolyamide, insbesondere Polyamid 6 und Polyamid 6.6.

Als sterisch gehinderte Phenole eignen sich prinzipiell alle Verbindungen mit phenolischer Struktur, die am phenolischen Ring mindestens eine sterisch anspruchsvolle Gruppe aufweisen.

Vorzugsweise kommen z.B. Verbindungen der Formel

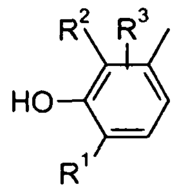

in Betracht, in der bedeuten:

$R^1$ und $R^2$ eine Alkylgruppe, eine substituierte Alkylgruppe oder eine substituierte Triazolgruppe, wobei die Reste $R^1$ und $R^2$ gleich oder verschieden sein können und $R^3$ eine Alkylgruppe, eine substituierte Alkylgruppe, eine Alkoxigruppe oder eine substituierte Aminogruppe.

Antioxidantien der genannten Art werden beispielsweise in der DE-A 27 02 661 (US-A 4 360 617) beschrieben.

Eine weitere Gruppe bevorzugter sterisch gehinderter Phenole leiten sich von substituierten Benzolcarbonsäuren ab, insbesondere von substituierten Benzolpropionsäuren.

Besonders bevorzugte Verbindungen aus dieser Klasse sind Verbindungen der Formel

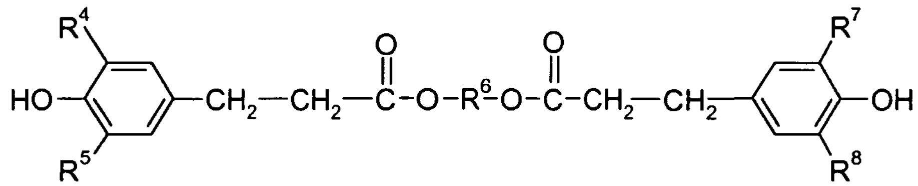

wobei $R^4$, $R^5$, $R^7$ und $R^8$ unabhängig voneinander $C_1$-$C_8$-Alkylgruppen darstellen, die ihrerseits substituiert sein können (mindestens eine davon ist eine sterisch anspruchsvolle Gruppe) und $R^6$ einen zweiwertigen aliphatischen Rest mit 1 bis 10 C-Atomen bedeutet, der in der Hauptkette auch C-O-Bindungen aufweisen kann.

Bevorzugte Verbindungen, die dieser Formel entsprechen, sind

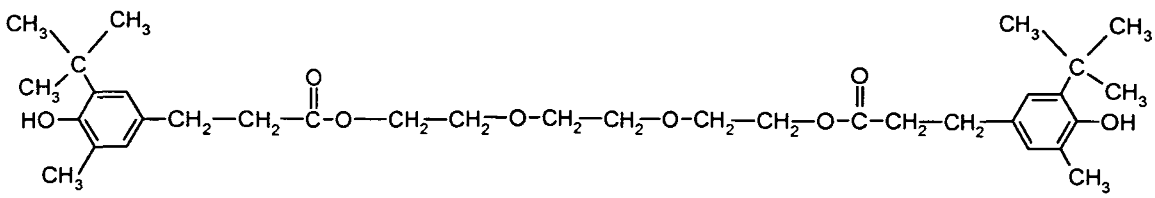

(Irganox® 245 der Firma Ciba-Geigy

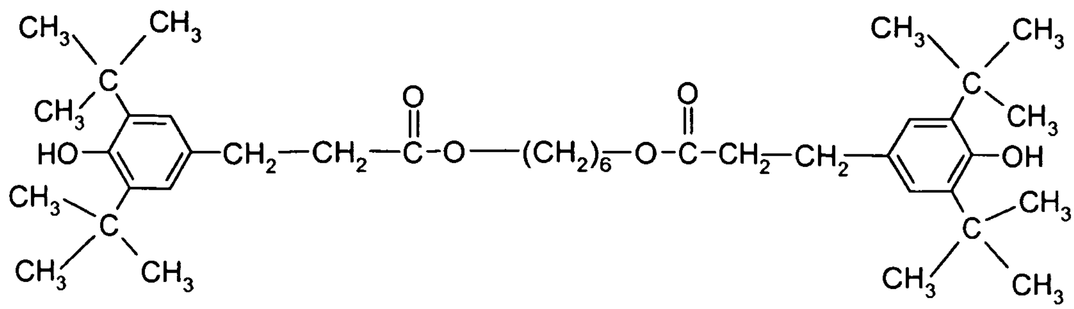

(Irganox® 259 der Firma Ciba-Geigy)

Beispielhaft genannt seien insgesamt als sterisch gehinderte Phenole:

2,2'-Methylen-bis-(4-methyl-6-tert.-butylphenol), 1,6-Hexandiol-bis[3-(3,5-di-tert.-butyl-4-hydroxyphenyl)-propionat], Pentaerythrityl-tetrakis-[3-(3,5-di-tert.-butyl-4-hydroxyphenyl)-propionat], Distearyl-3,5-di-tert.-butyl-4-hydroxybenzylphosphonat, 2,6,7-Trioxa-1-phosphabicyclo-[2.2.2]oct-4-yl-methyl-3,5-di-tert.-butyl-4-hydroxyhydrocinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyl-dimethylamin.

Als besonders wirksam erwiesen haben sich und daher vorzugsweise verwendet werden 2,2'-Methylen-bis-(4-methyl-6-tert.-butylphenol), 1,6-Hexandiol-bis-(3,5-di-tert.-butyl-4-hydroxyphenyl]-propionat (Irganox® 259), Pentaerythrityl-tetrakis-[3-(3,5-ditert.-butyl-4-hydroxyphenyl)-propionat] sowie N,N'-Hexamethylen-bis-3,5-di-tert.-butyl-4-hydroxyhydrocinnamid (Irganox® 1098) und das vorstehend beschriebene Irganox® 245 der Firma Ciba Geigy, das besonders gut geeignet ist.

Die phenolischen Antioxidantien, die einzeln oder als Gemische eingesetzt werden können, sind in einer Menge von 0,05 bis zu 3 Gew.-%, vorzugsweise von 0,1 bis 1,5 Gew.-%, insbesondere von 0,1 bis 1 Gew.-%, bezogen auf das Gesamtgewicht der Formmassen A) bis F) enthalten.

In manchen Fällen haben sich sterisch gehinderte Phenole mit nicht mehr als einer sterisch gehinderten Gruppe in ortho-Stellung zur phenolischen Hydroxygruppe als besonders vorteilhaft erwiesen; insbesondere bei der Beurteilung der Farbstabilität bei Lagerung in diffusem Licht über längere Zeiträume.

Beispiele für Schlagzähmodifier als Komponente F) sind Kautschuke, welche funktionelle Gruppen aufweisen können. Es können auch Mischungen aus zwei oder mehreren unterschiedlichen schlagzähmodifizierenden Kautschuken eingesetzt werden.

Kautschuke, die die Zähigkeit der Formmassen erhöhen enthalten im allgemeinen einen elastomeren Anteil, der eine Glasübergangstemperatur von weniger als -10°C, vorzugsweise von weniger als -30°C aufweist, und sie enthalten mindestens eine funktionelle Gruppe, die mit dem Polyamid reagieren kann. Geeignete funktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- oder Oxazolingruppen, bevorzugt Carbonsäureanhydridgruppen.

Zu den bevorzugten funktionalisierten Kautschuken zählen funktionalisierte Polyolefinkautschuke, die aus folgenden Komponenten aufgebaut sind:

1. 40 bis 99 Gew.-% mindestens eines alpha-Olefins mit 2 bis 8 C-Atomen,
2. 0 bis 50 Gew.-% eines Diens,

3. 0 bis 45 Gew.-% eines $C_1$-$C_{12}$-Alkylesters der Acrylsäure oder Methacrylsäure oder Mischungen derartiger Ester,
4. 0 bis 40 Gew.-% einer ethylenisch ungesättigten $C_2$-$C_{20}$-Mono- oder Dicarbonsäure oder einem funktionellen Derivat einer solchen Säure,
5. 0 bis 40 Gew.-% eines Epoxygruppen enthaltenden Monomeren, und
6. 0 bis 5 Gew.-% sonstiger radikalisch polymerisierbarer Monomerer,

wobei die Summe der Komponenten 3) bis 5) mindestens 1 bis 45 Gew.-% beträgt, bezogen auf die Komponenten 1) bis 6).

Als Beispiele für geeignete α-Olefine können Ethylen, Propylen, 1-Butylen, 1-Pentylen, 1-Hexylen, 1-Heptylen, 1-Octylen, 2-Methylpropylen, 3-Methyl-1-butylen und 3-Ethyl-1-butylen genannt werden, wobei Ethylen und Propylen bevorzugt sind.

Als geeignete Dien-Monomere seien beispielsweise konjugierte Diene mit 4 bis 8 C-Atomen, wie Isopren und Butadien, nicht-konjugierte Diene mit 5 bis 25 C-Atomen, wie Penta-1,4-dien, Hexa-1,4-dien, Hexa-1,5-dien, 2,5-Dimethylhexa-1,5-dien und Octa-1,4-dien, cyclische Diene, wie Cyclopentadien, Cyclohexadiene, Cyclooctadiene und Dicyclopentadien, sowie Alkenylnorbornen, wie 5-Ethyliden-2-norbornen, 5-Butyliden-2-norbornen, 2- Methallyl-5-norbornen, 2-Isopropenyl-5-norbornen und Tricyclodiene, wie 3- Methyltricyclo-(5.2.1.0.2.6)-3,8-decadien, oder deren Mischungen genannt. Bevorzugt werden Hexa-1,5-dien, 5-Ethyliden-norbornen und Dicyclopentadien.

Der Diengehalt beträgt vorzugsweise von 0,5 bis 50, insbesondere von 2 bis 20 und besonders bevorzugt von 3 bis 15 Gew.-%, bezogen auf das Gesamtgewicht des Olefinpolymerisats. Beispiele für geeignete Ester sind Methyl-, Ethyl-, Propyl-, n-Butyl, i-Butyl- und 2-Ethyl-hexyl-, Octyl- und Decylacrylate bzw. die entsprechenden Ester der Methacrylsäure. Von diesen werden Methyl-, Ethyl-, Propyl-, n-Butyl- und 2- Ethylhexylacrylat bzw. -methacrylat besonders bevorzugt.

Anstelle der Ester oder zusätzlich zu diesen können in den Olefinpolymerisaten auch säurefunktionelle und/ oder latent säurefunktionelle Monomere ethylenisch ungesättigter Mono- oder Dicarbonsäuren enthalten sein.

Beispiele für ethylenisch ungesättigte Mono- oder Dicarbonsäuren sind Acrylsäure, Methacrylsäure, tertiäre Alkylester dieser Säuren, insbesondere tert.-Butylacrylat und Dicarbonsäuren, wie Maleinsäure und Fumarsäure, oder Derivate dieser Säuren sowie deren Monoester.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden. Als Beispiele hierfür seien Anhydride von Dicarbonsäuren mit 2 bis 20 C-Atomen, insbesondere Maleinsäureanhydrid und tertiäre $C_1$-$C_{12}$-Alkylester der vorstehend genannten Säuren, insbesondere tert.-Butylacrylat und tert.-Butylmethacrylat angeführt.

Als sonstige Monomere kommen z. B. Vinylester und Vinylether in Betracht.

Besonders bevorzugt sind Olefinpolymerisate aus 50 bis 98,9, insbesondere von 60 bis 94,85 Gew.-% Ethylen, und von 1 bis 50, insbesondere von 5 bis 40 Gew.-% eines Esters der Acryl- oder Methacrylsäure, von 0,1 bis 20,0, insbesondere von 0,15 bis 15 Gew.-% Glycidylacrylat und/oder Glycidylmethacrylat, Acrylsäure und/oder Maleinsäureanhydrid.

Besonders geeignete funktionalisierte Kautschuke sind Ethylen-Methylmethacrylat-Glycidylmethacrylat-, Ethylen-Methylacrylat-Glycidylmethacrylat-, Ethylen-Methylacrylat-Glycidylacrylat- und Ethylen-Methylmethacrylat-Glycidylacrylat-Polymere.

Die Herstellung der vorstehend beschriebenen Polymere kann nach an sich bekannten Verfahren erfolgen, vorzugsweise durch statistische Copolymerisation unter hohem Druck und erhöhter Temperatur.

Der Schmelzindex dieser Copolymere liegt im Allgemeinen im Bereich von 1 bis 80 g/10 min (gemessen bei 190°C und 2,16 kg Belastung).

Als Kautschuke kommen weiterhin kommerzielle Ethylen-α-Olefin-Copolymere, welche mit Polyamid reaktionsfähige Gruppen enthalten, in Betracht. Die Herstellung der zugrunde liegenden Ethylen-α-Olefin-Copolymere erfolgt durch Übergangsmetallkatalyse in der Gasphase oder in Lösung. Als Comonomere kommen folgende α-Olefine in Frage: Propylen, 1-Buten, 1-Penten, 4-Methyl-1-penten, 1-Hexen, 1-Hepten, 1-Octen, 1-Nonen, 1-Decen, 1-Undecen, 1-Dodecen, Styrol und substituierte Styrole, Vinylester, Vinylacetate, Acrylester, Methacrylester, Glycidylacrylate und -methacrylate, Hydroxyethylacrylate, Acrylamide, Acrylnitril, Allylamin; Diene, wie z.B. Butadien Isopren.

Besonders bevorzugt sind Ethylen/1-Octen-Copolymere, Ethylen/1-Buten-Copolymere, Ethylen-Propylen-Copolymere, wobei Zusammensetzungen aus

- Von 25 bis 85 Gew.-%, vorzugsweise von 35 bis 80 Gew.-% Ethylen,
- Von 14,9 bis 72 Gew.-%, vorzugsweise von 19,8 bis 63 Gew.-% 1-Octen oder 1-Buten oder Propylen oder deren Mischungen
- Von 0,1 bis 3 Gew.-%, vorzugsweise von 0,2 bis 2 Gew.-% einer ethylenisch ungesättigten Mono- oder Dicarbonsäure oder einem funktionellen Derivat einer solchen Säure

besonders bevorzugt sind.

Das Molekulargewicht dieser Ethylen-α-Olefin-Copolymere liegen im Bereich von 10.000 bis 500.000 g/mol, bevorzugt von 15.000 bis 400.000 g/mol (Mn, bestimmt mittels GPC in 1,2,4-Trichlorbenzol mit PS-Eichung).

Der Anteil an Ethylen in den Ethylen-α-Olefin-Copolymere liegen im Bereich von 5 bis 97, bevorzugt von 10 bis 95, insbesondere von 15 bis 93 Gew.-%.

In einer besonderen Ausführungsform werden mittels sog. "single site catalysts" hergestellte Ethylen-α-Olefin-Copolymere eingesetzt. Weitere Einzelheiten können der US 5,272,236 entnommen werden. In diesem Fall weisen die Ethylen-α-Olefin-Copolymere eine für Polyolefine enge Molekulargewichtsverteilung kleiner 4, vorzugsweise kleiner 3,5 auf.

Als weitere Gruppe von geeigneten Kautschuken sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glasübergangstemperatur von mindestens 25°C, unter einem weichen Bestandteil ein Polymerisat mit einer Glasübergangstemperatur von höchstens 0°C. Diese Produkte weisen eine Struktur aus einem Kern und mindestens einer Schale auf, wobei sich die Struktur durch die Reihenfolge der Monomerenzugabe ergibt. Die weichen Bestandteile leiten sich im Allgemeinen von Butadien, Isopren, Alkylacrylaten, Alkylmethacrylaten oder Siloxanen und gegebenenfalls weiteren Comonomeren ab. Geeignete Siloxankerne können beispielsweise ausgehend von cyclischem oligomerem Octamethyltetrasiloxan oder Tetravinyltetramethyltetrasiloxan hergestellt werden. Diese können beispielsweise mit γ-Mercaptopropylmethyldimethoxysilan in einer ringöffnenden kationischen Polymerisation, vorzugsweise in Gegenwart von Sulfonsäuren, zu den weichen Siloxankernen umgesetzt werden. Die Siloxane können auch vernetzt werden, indem z.B. die Polymerisationsreaktion in Gegenwart von Silanen mit hydrolysierbaren Gruppen wie Halogen oder Alkoxygruppen wie Tetraethoxysilan, Methyltrimethoxysilan oder Phenyltrimethoxysilan durchgeführt wird. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich im Allgemeinen von Styrol, alpha-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeignet funktionalisierter Monomere bei der Polymerisation der letzten Schale. Geeignete funktionalisierte Monomere sind beispielsweise Maleinsäure, Maleinsäureanhydrid, Mono- oder Diester oder Maleinsäure, tertiär-Butyl-(meth)acrylat, Acrylsäure, Glycidyl(meth)acrylat und Vinyloxazolin. Der Anteil an Monomeren mit funktionellen Gruppen beträgt im Allgemeinen 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt im Allgemeinen 1 : 9 bis 9 : 1, bevorzugt 3 : 7 bis 8 : 2.

Derartige Kautschuke sind an sich bekannt und beispielsweise in der EP-A-0 208 187 beschrieben. Der Einbau von Oxazingruppen zur Funktionalisierung kann z.B. gemäß EP-A-0 791 606 erfolgen.

Eine weitere Gruppe von geeigneten Schlagzähmodifiern sind thermoplastische Polyester-Elastomere. Unter Polyester-Elastomeren werden dabei segmentierte Copolyetherester verstanden, die langkettige Segmente, die sich in der Regel von Poly-(alkylen)etherglykolen und kurzkettige Segmente, die sich von niedermolekularen Diolen und Dicarbonsäuren ableiten, enthalten. Derartige Produkte sind an sich bekannt und in der Literatur, z.B. in der US 3,651,014, beschrieben. Auch im Handel sind entsprechende Produkte unter den Bezeichnungen Hytrel TM (Du Pont), Arnitel TM (Akzo) und Pelprene TM (Toyobo Co. Ltd.) erhältlich.

Selbstverständlich können auch Mischungen verschiedener Kautschuke eingesetzt werden.

Als weitere Komponente F) können die efindungsgemäßen thermoplastischen Formmassen übliche Verarbeitungshilfsmittel wie Stabilisatoren, Oxidationsverzögerer, weitere Mittel gegen Wärmezersetzung und Zersetzung durch ultraviolettes Licht, Gleitund Entformungsmittel, Färbemittel wie Farbstoffe und Pigmente, Keimbildungsmittel, Weichmacher, Flammschutzmittel usw. enthalten.

Als Beispiele für Oxidationsverzögerer und Wärmestabilisatoren seien Phosphite und weitere Amine (z. B. TAD), Hydrochinone, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß und/oder Grafit, weiterhin organische Pigmente, wie Phthalocyanine, Chinacridone, Perylene sowie Farbstoffe, wie Nigrosin und Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Als Flammschutzmittel seien roter Phosphor, P- und N-haltige Flammschutzmittel sowie halogenierte FS-Mittel-Systeme und deren Synergisten genannt.

Bevorzugte Stabilisatoren sind aromatische sekundäre Amine in Mengen bis zu 2, vorzugsweise 0,5 bis 1,5 und insbesondere 0,7 bis 1 Gew.-%, gemäß der allgemeinen Formel I:

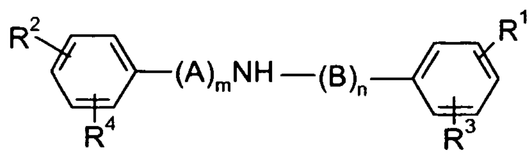

(I)

wobei
m,n = 0 oder 1 ,
A und B = durch $C_1$-$C_4$-Alkyl oder Phenyl substituiertes tertiäres C-Atom,
$R^1$, $R^2$ = Wasserstoff oder eine $C_1$-$C_6$-Alkylgruppe in ortho- oder para-Stellung, welcher gegebenenfalls substituiert sein kann durch 1 bis 3 Phenylreste, Halogen, Carboxylgruppe oder ein Übergangsmetallsalz dieser Carboxylgruppe, und
$R^3$, $R^4$ = Wasserstoff oder ein Methylrest in ortho- oder para-Position, wenn m plus n für 1 steht oder eine tertiäre $C_3$-$C_9$-Alkylgruppe in ortho- oder Para-Position, welche gegebenenfalls durch 1 bis 3 Phenylreste substituiert sein kann, wenn m plus n für 0 oder 1 steht,
bedeuten.

Bevorzugte Reste A oder B sind symmetrisch substituierte tertiäre Kohlenstoffatome, wobei dimethylsubstituierter tertiärer Kohlenstoff besonders bevorzugt ist. Ebenso bevorzugt sind tertiäre Kohlenstoffe, welche 1 bis 3 Phenylgruppen als Substituenten aufweisen.

Bevorzugte Reste $R^1$ oder $R^2$ sind para t-butyl oder tetramethylsubstituiertes n-Butyl, wobei die Methylgruppen vorzugsweise durch 1 bis 3 Phenylgruppen ersetzt sein können. Bevorzugte Halogene sind Chlor und Brom. Übergangsmetalle sind beispielsweise - welche mit $R^1$ oder $R^2$ = Carboxyl Übergangsmetallsalze bilden können.

Bevorzugte Reste $R^3$ oder $R^4$ sind für m plus n = 2 Wasserstoff, sowie für m plus n = 0 oder 1 ein t-Butylrest in ortho- oder para-Position, welcher insbesondere durch 1 bis 3 Phenylreste substituiert sein kann.

Beispiele für sekundäre aromatische Amine F) sind

4,4'-Bis(α,α'-tertiäroctyl)diphenylamin
4,4'Bis(α,α-dimethylbenzyl)diphenylamin
4,4'-Bis(α-methylbenzhydryl)diphenylamin
4-(1,1,3,3-Tetramethylbutyl)4'-triphenylmethyldiphenylamin
4,4'-Bis(α,α-p-trimethylbenzyl)diphenylamin
2,4,4'-Tris(α,α-dimethylbenzyl)diphenylamin
2,2'-Dibromo,4,4'-bis(α,α-dimethyl benzyl)diphenylamin
4,4'-Bis(α,α-dimethylbenzyl)-2-carboxydiphenylamini-nickel-4,4'-bis(α,α-dimethylbenzyl)-diphenylamin
2-sec-Butyl-4,4'-bis(α,α-dimethylbenzyl)diphenylamin
4,4'-Bis(α,α-dimethylbenzyl)-2-(α-methlheptyl)diphenylamin
2-(α-Methylpentyl)4,4'-ditrityldiphenylamin
4-α,α-Dimethylbenzyl-4'-isopropoxydiphenylamin
2-(α-Methylheptyl)-4'-(α,α-dimethylbenzyl)diphenylamin
2-(α-Methylpentyl)-4'-trityldiphenylamin
4,4'-Bis(tertiary-butyl)diphenylamin sowie:

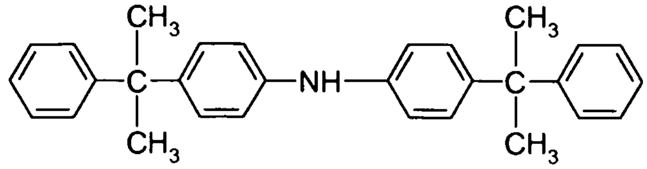

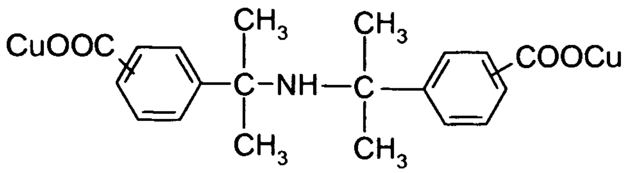

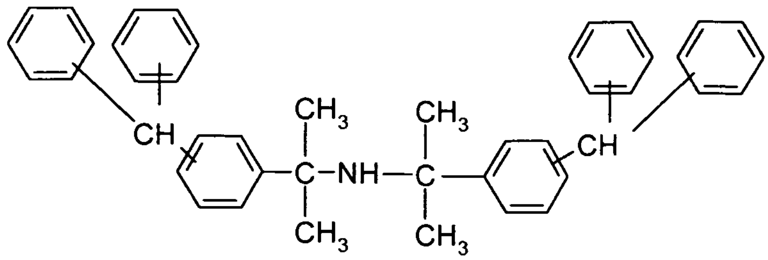

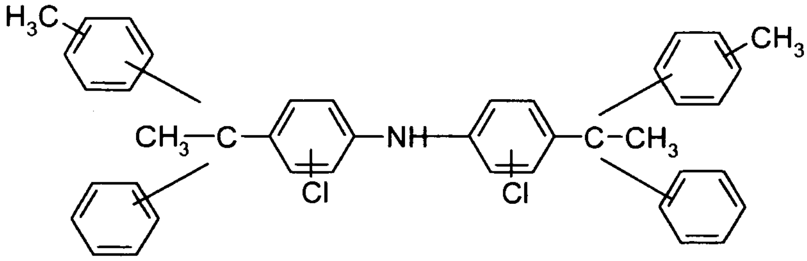

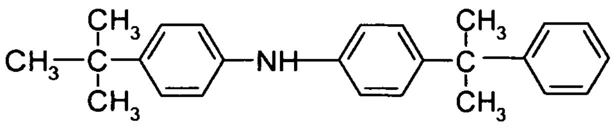

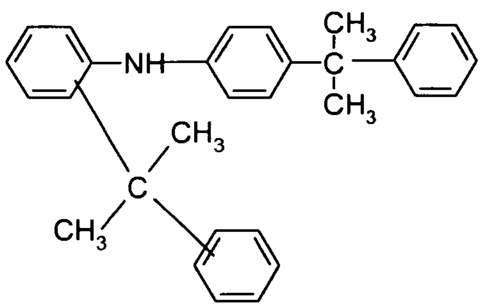

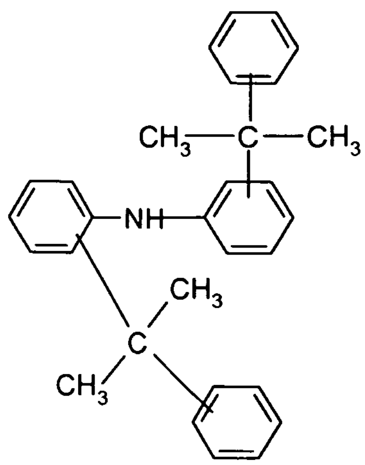

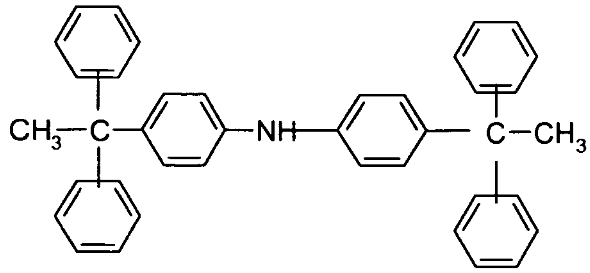

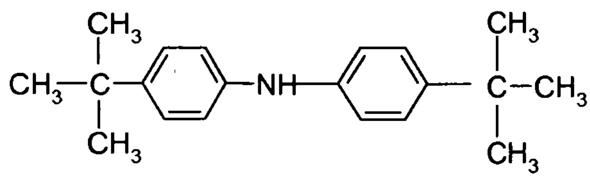

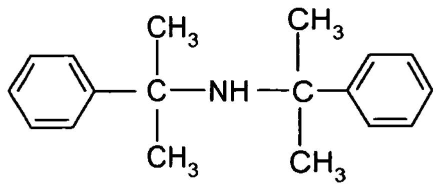

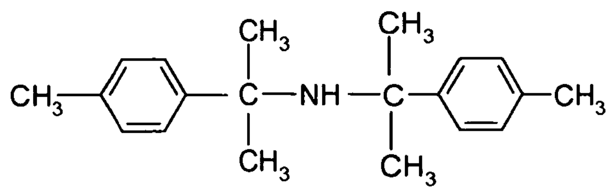

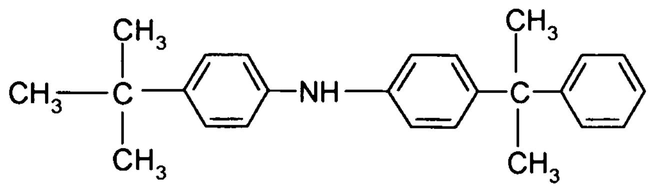

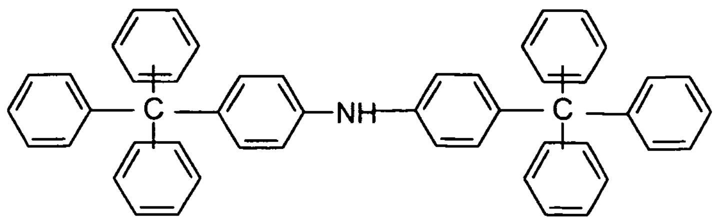

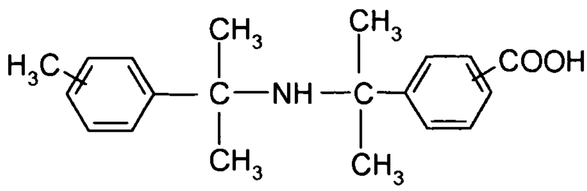

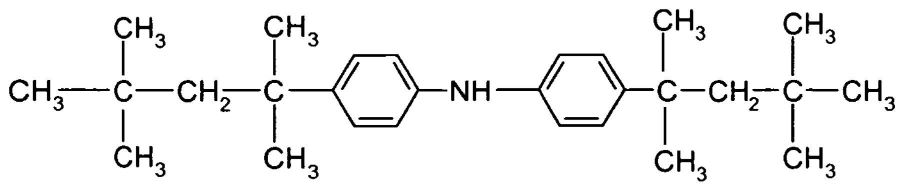

Die Herstellung erfolgt gemäß den in der BE-A 67/05 00 120 und CA-A 9 63 594 beschriebenen Verfahren. Bevorzugte sekundäre aromatische Amine sind Diphenylamin und dessen Derivate, welche als Naugard® (Firma Chemtura) im Handel erhältlich sind. Diese sind in Kombination mit bis zu 2000, vorzugsweise 100 bis 2000, bevorzugt 200 bis 500 und insbesondere 200 bis 400 ppm mindestens einer phosphorhaltigen anorganischen Säure oder deren Derivate bevorzugt.

Bevorzugte Säuren sind hypophosphorige Säure, phosphorige Säure oder Phosphorsäure sowie deren Salze mit Alkalimetallen, wobei Natrium und Kalium besonders bevorzugt sind. Bevorzugte Mischungen sind insbesondere hypophosphorige und phosphorige Säure bzw. deren Alkalimetallsalze im Verhältnis 3:1 bis 1:3. Unter organischen Derivaten dieser Säuren sollen vorzugsweise Esterderivate oben genannter Säuren verstanden werden.

Formmassen

Die erfindungsgemäßen thermoplastischen Formmassen können nach an sich bekannten Verfahren hergestellt werden, in dem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 320°C.

Nach einer weiteren bevorzugten Arbeitsweise können die Komponenten B) und C) sowie gegebenenfalls D) bis F) mit einem Präpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

Die erfindungsgemäßen thermoplastischen Formmassen zeichnen sich durch gute Mechanik sowie Wärmestabilität und eine gute Verarbeitbarkeit/Fließfähigkeit aus.

Die oben beschriebenen hyperverzweigten Polyetheramine der Komponente B) können in Kombination mit den oben beschriebenen amorphen Oxiden und/oder Oxidhydraten der Komponente C) erfindungsgemäß zur Verbesserung der Fließfähigkeit und/oder Wärmestabilität von Polyamiden verwendet werden.

Die erfindungsgemäßen thermoplastischen Formmassen selbst sind zur Herstellung von Fasern, Folien und Formkörpern jeglicher Art geeignet.

Erfindungsgegenstand sind außerdem Fasern, Folien und Formkörper, erhältlich aus den efindungsgemäßen thermoplastischen Formmassen.

Diese eignen sich zur Herstellung von Fasern, Folien und Formkörpern jeglicher Art. Nachfolgend sind einige bevorzugte Beispiele genannt:

Haushaltsartikel, elektronische Bauteile, medizinische Geräte, Kfz-Bauteile, Gehäuse von Elektrogeräten, Gehäuse von Elektronik-Komponenten im Kfz, Kotflügel, Türbeplankung, Heckklappen, Spoiler, Ansaugrohre, Wasserkästen, Gehäuse von Elektrowerkzeugen.

Erfindungsgegenstand ist außerdem die Kombination aus getrennt vorliegenden Komponenten A), B) und C) wie oben definiert zur gemeinsamen Anwendung

Beispiele

Es wurden folgende Komponenten verwendet

Tabelle 1: Komponente A

| Einsatzstoff | Polyamid charakterisiert durch Viskositätszahl VN nach ISO 307 vor Extrusion | Zusammensetzung |
|---|---|---|
| A-1 | PA-6 mit VN = 140 ml/g | 100 Gew.-% PA-6 |

Komponente B

Herstellung der Komponente B-1:

In einem Vierhalskolben, ausgestattet mit Rührer, Destillationsbrücke, Gaseinleitrohr und Innenthermometer, wurden 2000g Triethanolamin (TEA) sowie 13,5 g 50%ige wässrige unterphosphorige Säure vorgelegt und das Gemisch auf 230°C erwärmt. Bei ca. 220°C setzte langsam die Bildung von Kondensat ein. Das Reaktionsgemisch wurde bei 230°C über die in Tabelle 1 angegebene Zeit gerührt, wobei das bei der Reaktion entstandene Kondensat mittels mäßigen Stickstoffstroms als Strippgas über die Destillationsbrücke entfernt wurde. Gegen Ende der angegebenen Reaktionszeit wurde bei einem Unterdruck von 500mbar restliches Kondensat entfernt. Nach Ablauf der in Tabelle 1 angegebenen Zeit wurde der Ansatz auf 140°C abgekühlt und der Druck langsam und stufenweise auf 100mbar verringert um noch verbliebene flüchtigen Anteile zu entfernen.

Das Produktgemisch wurde anschließend auf Raumtemperatur abgekühlt und analysiert. Die Polyetheramin-Polyole wurden per Gelpermeationschromatographie mit einem Refraktometer als Detektor analysiert. Als mobile Phase wurde Hexafluorisopropanol (HFIP) verwendet, als Standard zur Bestimmung des Molekulargewichts wurde Polymethylmethacrylat (PMMA) eingesetzt.

Die Bestimmung der OH-Zahl erfolgte gemäß DIN 53240, Teil 2.

Tabelle 2: Komponente B

| Komp. Nr. | Amin | Reaktions-dauer (h) | Molekular-gewicht GPC (glmol) Mn Mw | OH- Zahl (mg KOH/g) |
|---|---|---|---|---|
| B-1 | TEA | 4 | 4400/10600 | 490 |

Komponente C:

Herstellung der Komponente C-1

100 g TEOS wurden mit 500 g Ethanol bei 60°C 30 Minuten lang gemischt. Anschließend wurde HCl (Konzentration 2 mol/l in Wasser) tropfenweise zugegeben, bis sich ein pH-Wert von 3 einstellte, woraufhin 352 g Wasser unter gleichmäßigem Rühren zugegeben wurden. Die Reaktion wurde anschließend bei 60°C 3 Stunden lang durchgeführt. Anschließend wurde die Temperatur auf 80°C für weitere 3 Stunden erhöht. Die erhaltene Dispersion mit $SiO_2$-Teilchen war klar und wies einen Feststoffgehalt von 3,5 % Gew.-% auf. Aus dieser Lösung wurde $SiO_2$ in Pulverform durch Trocknung erhalten. In einer ersten Stufe wurde bei 80°C und 50 mbar 8 Stunden lang getrocknet. Anschließend wurde das erhaltene Pulver in einem Vakuumofen bei 100°C weitere 12 Stunden lang getrocknet.

Komponente C-2: kolloidales $SiO_2$-Sol (Bindzil® CC/360 der Firma Eka Chemicals)

Die verwendeten Komponenten C-1 und C-2 wiesen folgende Eigenschaften auf:

Tabelle 3

| Komponente C) | Mittlerer Teilchendurchmesser $d_{50}$ [3] [nm] | Ar adsorbiert bei 2670 Pa [1] [$cm^3$/g] | Ar adsorbiert bei 1330 Pa [1] [$cm^3$/g] | DFT kumulative spezif. Oberfläche der Mikroporen [2] [$m^2$/g] | BET spezif. Oberfläche [$M^2$/g] |
|---|---|---|---|---|---|
| C-1 | 4 | 125 | 106 | 245 | 530 |
| C-2 | 8 | n.d. | n.d. | n.d. | 360 |

[1] Bei einer Temperatur von 87,4 K gemäß to DIN 66135-1
[2] Olivier-Conklin-DFT-Methode
[3] Berechnet aus der Teilchengrößenverteilung erhalten durch dynamische Lichtstreuung

Komponente E

Als Komponente E-1 wurden Glasfasern mit einem mittleren Durchmesser von 10 bis 20 Mikrometer und einer mittleren Länge von 200 bis 250 Mikrometer (Ownes Coming Fiberglass OFC 1110) eingesetzt.

Komponente F

Als Komponente F wurden 0,7 Gew.-% Ultrabatch® (Wärmestabilisator enthaltend Cul und Kl), 1,7 Gew.-% Colorbatch (Polyethylen mit Russ) und 1,7 Gew.-% Calciumstearat bezogen auf die Gesamtmenge an Komponente A-1 eingesetzt.

Die Formmassen wurden wie folgt hergestellt:

Alle Proben wurden durch Compoundierung in der Schmelze in einem Zweischneckenextruder ZSK-25 bei 280°C mit einem Durchsatz von 10 kg/h hergestellt.

Dabei wurde zunächst ein Masterbatch aus 95 Gew.-% Komponente A-1 und 5 Gew.-% Komponente C-1 bzw. C-2 unter den genannten Bedingungen durch Compoundierung hergestellt, wobei die Zugabe von Komponente A-1 im cold-feed-Modus und die Zugabe der Komponenten C-1 bzw. C-2 im hot-feed-Modus erfolgte.

Anschließend wurde der so erhaltene Masterbatch zusammen mit weiterer Komponente A-1 sowie Komponente F im cold feed-Modus der Compoundierung unter den genannten Bedingungen zugeführt. Während der Compoundierung wurde zudem Komponente B-1 im hot feed-Modus und anschließend Komponente E-1 im hot feed-Modus zugegeben. Die Mischzeit betrug 2 Minuten. Es wurde ein Granulat erhalten, welches getrocknet wurde. Der Wassergehalt des Granulats betrug weniger als 0,1 Gew.-%.

Die zur Bestimmung der Eigenschaften verwendeten Prüfkörper wurden mittels Spritzguss (Einspritztemperatur 280°C, Schmelzetemperatur 80°C) erhaltenen.

Der MVR wurde gemäß ISO 1133 bestimmt, bei 270°C/5kg Belastung. Die Charpy-Schlagzähigkeit wurde gekerbt gemäß ISO 179-2/1 eA bei 23°C; ungekerbt bei -30°C gemäß ISO 179-2/1 eU ermittelt. Die Zugeigenschaften wurden gemäß ISO 527-2 bestimmt. Die Spirallänge wurde mit Fließspirale 1,5 mm bei 280°C bestimmt. Die Viskositätszahl der Polyamide wurde nach DIN 53 727 an 0,5 gew.-%igen Lösungen in 96 Gew.-% Schwefelsäure gemessen.

Die Ergebnisse der Messungen und die Zusammensetzungen der Formmassen sind der Tabelle 4 zu entnehmen.

Tabelle 4

| Beispiel | A-1 Gew.-% | B-1 Gew.-% | C-1 Gew.-% | C-2 Gew.-% | E-1 Gew.-% | Viskositätszahl VN [ml/g] | Melt volume-flow rate MVR [g/ 10min] | Spirallänge [cm] | Charpy Schlagzähigkeit [kJ/m²] | Zugmodul [MPa] | Bruchfestigkeit [MPa] |
|---|---|---|---|---|---|---|---|---|---|---|---|
| V1 | 70 | - | - | - | 30 | 135 | 45 | 26,8 | 87,9 | 9778 | 175 |
| V2 | 69,5 | - | 0,5 | - | 30 | 140 | 43 | 27,5 | 92,4 | 9599 | 173 |
| V3 | 69,5 | - | - | 0,5 | 30 | 135 | 50 | 27,5 | 88 | 9985 | 177 |
| V4 | 69 | 1 | - | - | 30 | 125 | 58 | 31,4 | 75 | 9853 | 165 |
| V5 [1] | 68 | 2 | - | - | 30 | 142 | 44 | 27 | 91 | 9392 | 170 |
| 6 | 68,5 | 1 | 0,5 | - | 30 | 148 | 56 | 32 | 88 | 9538 | 173 |
| 7 | 67,5 | 2 | 0,5 | - | 30 | 143 | 79 | 35,3 | 85 | 9388 | 173 |
| 8 | 68,5 | 1 | - | 0,5 | 30 | 137 | 69 | 40 | 87 | 9551 | 177 |

[1] Da die Komponente B gegenüber der Komponente A reaktiv ist, sind die Eigenschaften der Beispiele V4 und V5 nicht direkt vergleichbar.

**Patentansprüche**

1. Thermoplastische Formmassen, enthaltend folgende Komponenten:

   A) mindestens ein thermoplastisches Polyamid,
   B) mindestens ein hyperverzweigtes Polyetheramin,
   C) mindestens ein amorphes Oxid und/oder Oxidhydrat mindestens eines Metalls oder Halbmetalls mit einem zahlengewichteten mittleren Durchmesser der Primärpartikel von 0,5 bis 20 nm.

2. Thermoplastische Formmassen gemäß Anspruch 1, wobei die Komponenten B) und C) in einem Gewichtsverhältnis B/C von 0,5 bis 8, vorzugsweise von 1 bis 4, enthalten sind.

3. Thermoplastische Formmassen nach Anspruch 1 oder 2, enthaltend von 50 bis 99,9 Gew.-% der Komponente A), von 0,05 bis 30 Gew.% der Komponente B) und von 0,05 bis 20 Gew.-% der Komponente C), wobei die Summe der Gewichtsprozente der Komponenten A) bis C) 100 Gew.-% bezogen auf die Gesamtheit der Komponenten A), B) und C) ergibt.

4. Thermoplastische Formmassen nach den Ansprüchen 1 bis 3, darüber hinaus enthaltend als Komponente D) mindestens ein Polyethylenimin.

5. Thermoplastische Formmassen nach den Ansprüchen 1 bis 4, darüber hinaus enthaltend als Komponente E) mindestens einen faserförmigen Füllstoff, vorzugsweise Glasfasern.

6. Thermoplastische Formmassen nach Anspruch 5, enthaltend von 15 bis 98,8 Gew.-% der Komponente A), von 0,1 bis 10 Gew.-% der Komponente B), von 0,1 bis 10 Gew.-% der Komponente C), von 0 bis 5 Gew.-% der Komponente D) und von 1 bis 70 Gew.-% der Komponente E), wobei die Summe der Gewichtsprozente der Komponenten A) bis E) 100 Gew.-% bezogen auf die Gesamtheit der Komponenten A) bis E) ergibt.

7. Thermoplastische Formmassen nach den Ansprüchen 1 bis 6, darüber hinaus enthaltend als Komponente (F) weitere Zusatzstoffe.

8. Thermoplastische Formmassen nach den Ansprüchen 1 bis 7, wobei Komponente C) durch ein Sol-Gel-Verfahren erhältlich ist.

9. Thermoplastische Formmassen nach den Ansprüchen 1 bis 8, enthaltend als Komponente C) ein amorphes Oxid und/oder Oxidhydrat von Silicium mit einem zahlengewichteten mittleren Durchmesser der Primärpartikel von 0,5 bis 20 nm.

10. Thermoplastische Formmassen nach den Ansprüchen 1 bis 9, wobei Komponente C) einen zahlengewichteten mittleren Durchmesser der Primärpartikel von 1 bis 15 nm, vorzugsweise von 1 bis 10 nm, aufweist.

11. Thermoplastische Formmassen nach den Ansprüchen 1 bis 10, wobei die Komponente B) eine OH-Zahl nach DIN 53240 von 100 bis 900 mg KOH/g aufweist.

12. Thermoplastische Formmassen nach den Ansprüchen 1 bis 11, wobei die Komponente B) im Mittel mindestens 3 funktionelle Hydroxylgruppen pro Molekül aufweist.

13. Thermoplastische Formmassen nach den Ansprüchen 1 bis 12, wobei die Komponente B) erhältlich ist durch Umsetzung von mindestens einem Trialkanolamin.

14. Verwendung von hyperverzweigten Polyetheraminen B) wie in den Ansprüchen 1 und 11 bis 13 definiert in Kombination mit amorphen Oxiden und/oder Oxidhydraten C) wie in den Ansprüchen 1 und 8 bis 10 definiert zur Verbesserung der Fließfähigkeit und/oder Wärmestabilität von Polyamiden.

15. Verwendung von thermoplastischen Formmassen gemäß den Ansprüchen 1 bis 13 zur Herstellung von Fasern, Folien und Formkörpern jeglicher Art.

16. Fasern, Folien und Formkörper, erhältlich aus den thermoplastischen Formmassen gemäß den Ansprüchen 1 bis 13.

**17.** Kombination aus getrennt vorliegenden Komponenten A), B) und C) wie in den Ansprüchen 1 und 8 bis 13 definiert zur gemeinsamen Anwendung.

## Claims

**1.** A thermoplastic molding composition, comprising the following components:

A) at least one thermoplastic polyamide,
B) at least one hyperbranched polyetheramine,
C) at least one amorphous oxide and/or oxide hydrate of at least one metal or semimetal with a number-average diameter of the primary particles of from 0.5 to 20 nm.

**2.** The thermoplastic molding composition according to claim 1, where components B) and C) are comprised in a ratio by weight B/C of from 0.5 to 8, preferably from 1 to 4.

**3.** The thermoplastic molding composition according to claim 1 or 2, comprising from 50 to 99.9% by weight of component A), from 0.05 to 30% by weight of component B), and from 0.05 to 20% by weight of component C), where the total of the percentages by weight of components A) to C) is 100% by weight based on the total amount of components A), B), and C) .

**4.** The thermoplastic molding composition according to claims 1 to 3, comprising, in addition thereto, at least one polyethyleneimine as component D).

**5.** The thermoplastic molding composition according to claims 1 to 4, comprising, in addition thereto, at least one fibrous filler as component E), preferably glass fibers.

**6.** The thermoplastic molding composition according to claim 5, comprising from 15 to 98.8% by weight of component A), from 0.1 to 10% by weight of component B), from 0.1 to 10% by weight of component C), from 0 to 5% by weight of component D), and from 1 to 70% by weight of component E), where the total of the percentages by weight of components A) to E) is 100% by weight based on the total amount of components A) to E).

**7.** The thermoplastic molding composition according to claims 1 to 6, comprising, in addition thereto, further added materials as component (F).

**8.** The thermoplastic molding composition according to claims 1 to 7, where component C) is obtainable via a sol-gel process.

**9.** The thermoplastic molding composition according to claims 1 to 8, comprising, as component C), an amorphous oxide and/or oxide hydrate of silicon with a number-average diameter of the primary particles of from 0.5 to 20 nm.

**10.** The thermoplastic molding composition according to claims 1 to 9, where component C) has a number-average diameter of the primary particles of from 1 to 15 nm, preferably from 1 to 10 nm.

**11.** The thermoplastic molding composition according to claims 1 to 10, where component B) has a OH number to DIN 53240 of from 100 to 900 mg KOH/g.

**12.** The thermoplastic molding composition according to claims 1 to 11, where component B) has an average of at least 3 functional hydroxy groups per molecule.

**13.** The thermoplastic molding composition according to claims 1 to 12, where component B) is obtainable via reaction of at least one trialkanolamine.

**14.** The use of hyperbranched polyetheramines B) as defined in claims 1 and 11 to 13 in combination with amorphous oxides and/or oxide hydrates C), as defined in claims 1 and 8 to 10, for improving the flowability and/or thermal stability of polyamides.

**15.** The use of thermoplastic molding compositions according to claims 1 to 13 for the production of fibers, of foils, and

of moldings of any type.

**16.** A fiber, a foil, or a molding, obtainable from the thermoplastic molding compositions according to claims 1 to 13.

**17.** A combination of separate components A), B), and C), as defined in claims 1 and 8 to 13, for use together.

**Revendications**

**1.** Masses de moulage thermoplastiques, contenant les composants suivants :

A) au moins un polyamide thermoplastique,
B) au moins une polyétheramine hyperramifiée,
C) au moins un oxyde amorphe et/ou un oxyde hydraté d'au moins un métal ou semi-métal présentant un diamètre moyen pondéré par le nombre des particules primaires de 0,5 à 20 nm.

**2.** Masses de moulage thermoplastiques selon la revendication 1, les composants B) et C) étant contenus dans un rapport pondéral B/C de 0,5 à 8, de préférence de 1 à 4.

**3.** Masses de moulage thermoplastiques selon la revendication 1 ou 2, contenant 50 à 99,9% en poids de composant A), 0,05 à 30% en poids de composant B) et 0,05 à 20% en poids de composant C), la somme des % en poids des composants A) à C) valant 100% en poids par rapport à la totalité des composants A), B) et C).

**4.** Masses de moulage thermoplastiques selon les revendications 1 à 3, contenant en outre comme composant D) au moins une polyéthylène-imine.

**5.** Masses de moulage thermoplastiques selon les revendications 1 à 4, contenant en outre comme composant E) au moins une charge sous forme de fibres, de préférence des fibres de verre.

**6.** Masses de moulage thermoplastiques selon la revendication 5, contenant 15 à 98,8% en poids de composant A), 0,1 à 10% en poids de composant B), 0,1 à 10% en poids de composant C), 0 à 5% en poids de composant D) et 1 à 70% en poids de composant E), la somme des % en poids des composants A) à E) valant 100% en poids par rapport à la totalité des composants A) à E).

**7.** Masses de moulage thermoplastiques selon les revendications 1 à 6, contenant en outre d'autres additifs comme composant F).

**8.** Masses de moulage thermoplastiques selon les revendications 1 à 7, le composant C) pouvant être obtenu par un procédé sol-gel.

**9.** Masses de moulage thermoplastiques selon les revendications 1 à 8, contenant comme composant C) un oxyde amorphe et/ou un oxyde hydraté de silicium présentant un diamètre moyen pondéré par le nombre des particules primaires de 0,5 à 20 nm.

**10.** Masses de moulage thermoplastiques selon les revendications 1 à 9, le composant C) présentant un diamètre moyen pondéré par le nombre des particules primaires de 1 à 15 nm, de préférence de 1 à 10 nm.

**11.** Masses de moulage thermoplastiques selon les revendications 1 à 10, le composant B) présentant un indice d'OH selon la norme DIN 53240 de 100 à 900 mg de KOH/g.

**12.** Masses de moulage thermoplastiques selon les revendications 1 à 11, le composant B) présentant en moyenne au moins 3 groupes hydroxyle fonctionnels par molécule.

**13.** Masses de moulage thermoplastiques selon les revendications 1 à 12, le composant B) pouvant être obtenu par transformation d'au moins une trialcanolamine.

**14.** Utilisation de polyétheramines B) hyperramifiées telles que définies dans les revendications 1 et 11 à 13, en combinaison avec des oxydes amorphes et/ou des oxydes hydratés C) tels que définis dans les revendications 1 et 8

à 10 pour améliorer l'aptitude à l'écoulement et/ou la stabilité thermique de polyamides.

**15.** Utilisation de masses de moulage thermoplastiques selon les revendications 1 à 13 pour la fabrication de fibres, de feuilles et de corps moulés de tous types.

**16.** Fibres, feuilles et corps moulés de tous types pouvant être obtenus à partir des masses de moulage thermoplastiques selon les revendications 1 à 13.

**17.** Combinaison de composants A), B) et C) séparés, tels que définis dans les revendications 1 et 8 à 13 pour une utilisation commune.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2178173 A
- US 2290415 A
- US 2407895 A
- DE 4003243
- US 4404362 A
- EP 1424360 A
- WO 200642705 A
- WO 2004041937 A
- WO 2006122602 A
- EP 2008050062 W
- US 2071250 A
- US 2071251 A
- US 2130523 A
- US 2130948 A
- US 2241322 A
- US 2312966 A
- US 2512606 A
- US 3393210 A
- DE 10313681 A
- EP 1198491 A
- EP 922065 A
- EP 38094 A
- EP 38582 A
- EP 39524 A
- EP 299444 A
- EP 129195 A
- EP 129196 A
- EP 07120395 A
- EP 07120393 A
- WO 9412560 A
- DE 19931720 A
- US 4144123 A
- EP 895521 A
- EP 25515 A
- EP 675914 A
- DE 2702661 A
- US 4360617 A
- US 5272236 A
- EP 0208187 A
- EP 0791606 A
- US 3651014 A
- BE 670500120 A
- CA 963594 A


### In der Beschreibung aufgeführte Nicht-Patentliteratur


- **GÄCHTER, MÜLLER.** Kunststoffadditive. Carl Hanser Verlag, 1989, vol. 479, 486-488
- Colloidal Silica-Concentrated Sols. **ILER, RALPH K.** The Chemistry of Silica. John Wiley & Sons, 1979, 331-343
- **SANCHEZ et al.** *Chemistry of Materials,* 2001, vol. 13, 3061-3083
- **OLIVIER, J. P. ; CONKLIN, W. B. ; SZOMBATHELY, M.** Characterization of Porous Solids III. Elsevier, 1994, 81
- Ullmann's Encyclopedia of Industrial Chemistry. 15. Dezember 2006